# EUROPEAN PATENT SPECIFICATION

(11) **EP 4 504 827 B1**
(45) Date of publication and mention of the grant of the patent: **06.05.2026**
(21) Application number: 23715108.9
(22) Date of filing: 28.03.2023
(51) Int. Cl.: C08J 11/16, C08J 11/02, C08J 99/00, B01J 35/00

(54) **VALUE CHAIN RETURN PROCESS FOR THE RECOVERY OF PHOSPHOROUS ESTER-BASED FLAME RETARDANTS FROM POLYURETHANE RIGID FOAMS**
WERTSCHÖPFUNGSKETTEN-RÜCKFÜHRUNGSVERFAHREN ZUR RÜCKGEWINNUNG VON FLAMMSCHUTZMITTELN AUF PHOSPHORESTERBASIS AUS POLYURETHANHARTSCHAUMSTOFFEN
PROCÉDÉ DE RETOUR DE CHAÎNE DE VALEUR POUR LA RÉCUPÉRATION DE PRODUITS IGNIFUGES À BASE D'ESTER DE PHOSPHORE À PARTIR DE MOUSSES DE POLYURÉTHANE RIGIDES

(30) Priority: 04.04.2022 EP 22166436
(43) Date of publication of application: 12.02.2025
(73) Proprietor: BASF SE, 67056 Ludwigshafen am Rhein (DE)
(72) Inventor: SCHAUB, Thomas, 67056 Ludwigshafen am Rhein (DE); SCHUETTE, Markus, 49448 Lemfoerde (DE); HASHMI, A. Stephen K., 69117 Heidelberg (DE); ZUBAR, Viktoriia, 69120 Heidelberg (DE); KLEIN, Philippe, 69120 Heidelberg (DE)
(74) Representative: BASF IP Association
(86) International application number: PCT/EP2023/057888
(87) International publication number: WO 2023/194140

(56) References cited:
- GAUSAS LAURYNAS ET AL: "Evaluation of Manganese Catalysts for the Hydrogenative Deconstruction of Commercial and End-of-Life Polyurethane Samples", vol. 15, no. 1, 10 January 2022 (2022-01-10), DE, XP055955573, ISSN: 1864-5631, Retrieved from the Internet <URL:https://onlinelibrary.wiley.com/doi/full-xml/10.1002/cssc.202101705> [retrieved on 20220829], DOI: 10.1002/cssc.202101705

## Description

The present invention relates to a value chain return process for polyurethane rigid foams which allows for the recovery of phosphorous ester-based flame retardants contained therein.

In the last three decades, there has been an enormous increase in worldwide plastics demand. For example, in the last 10 years, the amount of plastics produced worldwide has increased by almost 50%. Within 30 years, it has even almost quadrupled reaching an amount of 359 million metric tons in 2018. From these facts, it becomes clear that production of said huge amounts of plastics is followed by a need to dispose or recycle spent plastics. Preference should be given to recycling as thereby valuable materials, e.g. compounds which can act as monomers, can be added back to the value chain, e.g. by direct re-use in plastics production. Plastics are used with additive components incorporated for the purpose of imparting various functions to the resins. For example, as resins have high combustibility by themselves, the resins are mixed with flame retardants in a proportion of up to 25% by weight from the viewpoint of preventing the spread of fire. The possibility of returning flame retardants into the industrial cycle appears to be promising both with respect to saving of resources and from an economic point of view.

In addition, in the industrial production of polyurethane rigid foams, polyurethane (PU) rigid foam wastes are incurred. For example, such waste of PU rigid foam is obtained upon casting blocks of PU rigid foam, followed by cutting, trimming or sizing said blocks to obtain the desired PU workpiece. Additionally, rejects of PU rigid foams such as off-spec products are incurred.

Thus, there is a need to develop processing techniques to recover materials from plastic waste. The recycling process should reduce both the waste of material and the carbon footprint. Further, it should be an economical and energy efficient process delivering valuable materials which comprise high technical features. In contrast, disposal, e.g. by combustion, has a negative impact on the environment as well as on the carbon footprint.

Among the plastics mentioned above, polyurethanes (PU) are important representatives. Generally, polyurethanes are produced by polyaddition of (poly)isocyanates with polyol. The characteristic chain link is the urethane group. Polyurethane exists in many types, e.g. as foams, elastomers, or thermosets, among which foams are especially important.

The polyaddition of (poly)isocyanates with polyol results in the formation of linear, branched, or cross-linked polyurethanes. As an alternative to alcohols, the most important group of NCO-reactive compounds are amines resulting in the formation of di- or trisubstituted ureas. Ureas are also formed by the reaction of water with isocyanates, in which the carbamic acid formed in the first step of the reaction spontaneously decomposes to an amine with elimination of carbon dioxide. This amine then reacts with excess isocyanate to yield symmetrically substituted ureas. This reaction is the basic reaction leading to polyurethane foams.

These foams may be formed in wide range of densities and may be of flexible, or rigid foam structures. Generally speaking, "flexible foams" are those that recover their shape after deformation. In addition to being reversibly deformable, flexible foams tend to have limited resistance to applied load and tend to have mostly open cells. "Rigid foams" are those that generally retain the deformed shape without significant recovery after deformation. Rigid foams tend to have mostly closed cells. Whether PU soft foams or PU rigid foams are formed during polyaddition mainly depends on the types of polyisocyanate and polyol components used. For example, the starting materials may influence the crosslinking of the polymers meaning that the polymer consists of a three-dimensional network. Long, flexible segments, contributed by the polyol, result in the formation of PU soft foams. PU rigid foams are obtained from short chains with many crosslinks. More details for the polyurethane rigid foams suitable to be used according the invention can be found in: Kunststoffhandbuch, Band 7, Polyurethane, Carl-Hanser-Verlag, 3. Auflage, 1993, Kapitel 6.

Polyurethane rigid foams provide excellent insulation properties. Thus, they are of great importance in the construction sector and commonly used as insulation materials, e.g. for buildings insulations. However, for application of polyurethane rigid foams as insulation material in buildings, the addition of flame retardants is necessary for fire protection reasons. For this purpose, flame retardants are added in the production process of the polyurethane rigid foams. Nowadays, mainly phosphorous esters, such as tris(2-chloroethyl)phosphate, tris(chloroisopropyl)phosphate, tris(1,3-dichloro-2-propyl)phosphate, tris(2-ethylhexyl)phosphate, triethylphosphate, tricresylphosphate, tris-(2,3-dibromo)phosphate, tetrakis-(2-chlorethyl)-ethylenediphosphate, dimethylphosphonate, dimethylpropylphosphonate, diphenylcresylphosphate, and mixtures thereof are used as flame retardants in polyurethane rigid foams for constructions applications (see: Chemosphere, 2012, 88, 1119-1153 and WO 2015/121057).

The recycling of polyurethane rigid foams to valuable monomeric compounds and recovery of the phosphorous ester flame retardants still remains challenging. The polyol compound can be recovered and recycled by glycolysis or hydrolysis (see: Plastics recycling and Polyurethanes, in Ullmann's Encyclopedia of Industrial Chemistry, 2020, DOI: 10.1002/14356007.a21_057.pub2).

US4196148A describes a method for hydrolysis of polyurethane foam and recovery of diamines and polyethers (or polyesters) from the hydrolysate carried out near atmospheric pressure and temperatures above 185 °C.

While hydrolysis of polyurethane foams allows for recycling of the constituting monomers, phosphorous-based flame retardants are being decomposed under the harsh hydrolytic reaction conditions (see: Ullmann's Encyclopedia of Industrial Chemistry, Phosphorus Compounds, Organic, 2012, DOI: 10.1002/14356007.a19_545.pub2). Such decomposition is not only disadvantageous from the perspective that the flame retardants are no longer available for reuse, but the hydrolysis products of the esters can also contaminate the polyol and/or the polyamine which may result in a more complicated, resource-intensive and expensive work-up process.

Therefore, it would be of high economic interest to depolymerize polyurethane rigid foams in a way that the polyol, the polyamine as well as the phosphorous ester-based flame retardant can be obtained.

T. Schaub et al., ChemSusChem, 2020, DOI: 10.1002/cssc.202002465 describe the depolymerization of nylons and polyurethanes using homogeneous ruthenium catalyst with tridentate P,N,N-ligands in tetrahydrofuran as solvent. So far, good results were obtained using the ruthenium catalysts at 200 °C, 100 bar H₂ in tetrahydrofuran as solvent to obtain the amine component as well as the polyol from toluene diisocyanate-based polyurethane soft foams. However, hydrogenation of a methylenedi(phenylisocyanate)-based polyurethane rigid foam containing a phosphorous ester-based flame retardant is not disclosed.

T. Skrydstrup et al., JACS Au, 2021, DOI: 10.1021/jacsau.1c00050 describe the depolymerization of polyurethanes using 2 mol-% of a homogeneous iridium catalyst with tridentate P,N,P-ligands in 2-propanol as solvent at 150 °C and 30 bar H₂ pressure. In this work, methylenedi(phenylisocyanate)-based polyurethane rigid foams from a refrigerator insulation were hydrogenated yielding the corresponding diamine as well as the polyol. The authors detected a phosphorous compound in the polyol fraction having a signal at 20.00 ppm in the ³¹P NMR spectrum. It was suggested that this phosphorous compound may be due to a phosphorous-based flame retardant, but no further confirmation, characterization or isolation of this unknown phosphorous compound was carried out. However, PU rigid foams used in refrigerator insulations usually do not contain phosphorus-based flame retardants. Also, commonly used phosphorous ester-based flame retardants for polyurethane rigid foams do not have a chemical shift of around 20 ppm in the ³¹P NMR spectrum, but usually below 1 ppm: - 2.5 ppm for tris(2-chloroethyl)phosphate (see: Zhurnal Obshchei Khimii, 1978, 78, 694-695), -4.2 ppm for tris(chloroisopropyl)phosphate (measured at a reference sample), 0.24 ppm for tris(2-ethylhexyl)phosphate (see: J. Chem. Eng. Data, 2008, 53, 2718-2720) or -0.8 ppm for triethylphosphate (see: Phosphorus, Sulfur and Silicon and the Related Elements, 1991, 61, 31-39). Therefore, Skrydstrup et al. does not disclose the recovery of a phosphorous ester-based flame retardant from a polyurethane rigid foam. Most likely, the authors detected in the ³¹P NMR spectrum the phosphine oxide of the phosphine-ligand of the catalyst that was employed. The oxide of said PNP-ligand, Ph₂P(O)C₂H₄NHC₂H₄P(O)Ph₂, has a phosphine oxide signal at 20 ppm in the ³¹P NMR spectrum (measured at a reference sample of the oxidized PNP-ligand).

T. Schaub et al., ChemSusChem, 2021, DOI: 10.1002/cssc.202101606 describe the depolymerization of polyurethanes using 2-4 mol-% of a homogeneous manganese catalyst with tridentate P,N,N-ligands in toluene or THF as solvent at 130 to 200 °C and 60 bar H₂ pressure. When applying the system to methylenedi(phenylisocyanate)-based polyurethane rigid foams, the corresponding diamine as well as the polyol could be obtained and isolated. Said rigid foams did not contain a phosphorous-based flame retardant. Thus, the recovery of phosphorous-based flame retardants from polyurethane rigid foams is neither disclosed nor suggested in this document.

T. Skrydstrup et al., ChemSusChem, 2021, DOI: 10.1002/cssc.202101705 describe the depolymerization of polyurethanes using 1 mol-% of a homogeneous manganese catalyst with tridentate P,N,P-ligands in 2-propanol as solvent at 180 °C and 50 bar H₂ pressure. This system was applied to a methylenedi(phenylisocyanate)-based polyurethane rigid foam from a refrigerator insulation and a polyurethane rigid foam for decoration. In both cases, the corresponding diamine as well as the polyol could be obtained and isolated. The authors detected a phosphorous compound in the polyol fraction obtained from the PU rigid foam for decoration having a signal at 31.00 ppm and a phosphorous compound in the polyol fraction obtained from the PU rigid foam from a refrigerator insulation having a signal at 32.05 ppm in the ³¹P NMR spectrum. As described above, also for these unknown phosphorous compounds, the authors suggested that the signal may originate from a phosphorous-based flame retardant. Again, no further confirmation, characterization or isolation of the unknown phosphorous compounds was carried out. However, as described above in further detail, PU rigid foams used in refrigerator insulations and decoration usually do not contain phosphorus-based flame retardants. Also, commonly used phosphorous ester-based flame retardants for polyurethane rigid foams do not have a chemical shift of around 31 ppm in the ³¹P NMR spectrum, but usually below 1 ppm (see above). Therefore, also this work does not disclose the recovery of a phosphorous ester-based flame retardant from a polyurethane rigid foam.

The above-described plastics recycling processes do so far not disclose a method for recycling polyurethane rigid foams in way to obtain both the valuable amine components and the polyol components alongside with recovering the phosphorous ester-based flame retardants. Up to now, it has been unknown whether a phosphorous ester-based flame retardant is prone to decomposition under hydrogenation conditions, i.e. at relatively high reaction temperatures and in protic solvents such as 2-propanol.

Therefore, it would be of high economic interest to depolymerize polyurethane rigid foams containing phosphorous ester-based flame retardants in a way that the polyol, the aromatic amine as well as the phosphorous ester-based flame retardant can be obtained.

This object has been achieved by a value chain return process for polyurethane rigid foams containing at least one phosphorous ester-based flame retardant. The process comprises hydrogenating the polyurethane rigid foam
- in an organic aprotic solvent,
- in a hydrogen atmosphere,
- in the presence of at least one homogeneous transition metal catalyst complex, wherein the transition metal is selected from metals of groups 7, 8, 9 and 10 of the periodic table of elements according to IUPAC, and
- at a reaction temperature of at least 120 °C,
to obtain a hydrogenation product containing a polyamine and a polyol from the polyurethane rigid foam, and recovering the flame retardant from the hydrogenation product.

"Value chain return" is intended to mean that the low molecular products obtained by the process of the invention can be re-integrated in a value chain leading to polyurethanes or else be used as feedstocks in an other value chain.

Suprisingly, in said value chain return process, the phosphorous ester-based flame retardants are recovered in a chemically unchanged form. In other words, the phosphorous ester-based flame retardands do neither react nor are they being decomposed under the hydrogenation reaction conditions applied in the process. This allows for the phosphorous ester-based flame retardands to be recovered after the hydrogenation reaction.

Thus, the present method enables re-utilization of both starting material components as well as the phosphorous ester-based flame retardant. The components are either recovered directly (polyols) or obtained as valuable synthesis building blocks such as polyamines which may readily be converted to polyisocyanates.

The value chain return process of the invention for polyurethane rigid foams containing at least one phosphorous ester-based flame retardant results in a hydrogenation product. Said hydrogenation product contains a polyamine and a polyol from the polyurethane rigid foam. Alongside with the polyamine and the polyol, the phosphorous ester-based flame retardant is present as a further component in the hydrogenation product.

The work-up of the hydrogenation product, in particular the isolation of the polyamine, the polyol and the phosphorous ester-based flame retardant can be realized case dependent, for example by aqueous extractive work-up, chromatography or distillation under reduced pressure. Preferably, the work up comprises several steps.

In work-up by distillation, compounds are separated according to their volatility, with more volatile compounds being separated first. Generally, the "volatility" of a liquid may be described using its vapor pressure, wherein a high vapor pressure indicates a high volatility, and vice versa. In the context of the present invention, the polyamine and the phosphorous ester-based flame retardant are generally more volatile than the polyol.

In the event that the polyamine is more volatile than the polyol and the flame retardant, the polyamine is recovered from the hydrogenation product via distillation, preferably via distillation at reduced pressure. After distilling-off the polyamine, a distillation bottoms remains which contains the polyol alongside with the flame retardant. In a next step, the flame retardant may be recovered via distillation from the distillation bottoms yielding a fraction consisting essentially of the flame retardant and a distillation bottoms containing the polyol. Alternatively, the flame retardant can also be left in the polyol which can be subsequently used for the synthesis of new polyurethanes. In the synthesis of PU rigid foams, it is customary that the flame retardant is mixed with the polyol component prior to reaction with the isocyanate components.

In the event that the flame retardant is more volatile than the polyol and the polyamine, the flame retardant may be recovered via distillation from the hydrogenation product, preferably via distillation at reduced pressure. After distilling-off the flame retardant, a distillation bottoms remains which contains the polyol alongside with the polyamine. In a next step, the polyamine may be recovered via distillation from the distillation bottoms yielding a fraction consisting essentially of the polyamine and a distillation bottoms containing the polyol.

After removal of the volatile components according to the above embodiments, the polyol is suitably recovered as the distillation bottoms.

Alternatively, the polyol may be recovered by extraction from the distillation bottoms using a suitable extractant. This procedure is also favorable in view of further components besides the polyol contained in the distillation bottoms, e.g. the hydrogenation catalyst. For example, a water-soluble polyol may be obtained from the aqueous phase after extraction of the distillation bottoms and the hydrogenation catalyst may be recovered from the organic phase after extraction. The catalyst, once separated from the product, can be returned to the reactor for re-use. Alternatively, the catalyst solution can be diluted with a solvent and re-used.

Alternatively, the polyol may be recovered by extraction from the hydrogenation product, i.e. before carrying out the recovery of volatile compounds as described above. From the remainder, the polyamine and the flame retardant may then be obtained analogously as described above, i.e. via distillation.

In a still further alternative, the polyol may be recovered by extraction from the distillation bottoms which is obtained upon distilling off a volatile component as described above.

It is understood that the separation process described above can be combined with any of the various embodiments of the inventive process described herein.

The invention is applicable to polyurethane rigid foam waste containing at least one phosphorous ester-based flame retardant as starting materials. Herein, the term "polyurethane rigid foam waste" includes spent polyurethane rigid foams and production rejects of PU rigid foams. In this context, the term "spent polyurethane rigid foam" denotes an item produced from a polyurethane rigid foam at a time when it has already been used for the purpose for which it was manufactured. "Production rejects of polyurethane rigid foams" denotes polyurethane rigid foam waste occuring in production processes of PU rigid foams.

Generally, polyurethane rigid foams are produced by a reaction between a polyisocyanate component and a polyol component. Further materials, such as phosphorous ester-based flame retardands, are added in the production process of the polymers.

The properties of a polyurethane rigid foam are influenced by the types of polyisocyanate and polyol components used. For example, the starting materials may influence the crosslinking of the polymers meaning that the polymer consists of a three-dimensional network. Rigid polymers are obtained from short chains with many crosslinks.

Industrially and consequently in large quantities, especially methylenedi(phenylisocyanate) (MDI) or its polymeric forms are used as polyisocyanate components for the production of PU rigid foams. In smaller quantities, 1,6-hexanediisocyanate, isophoronediisocyanate, and 1,5-naphthyldiisocyanate are used as polyisocyanate components for this purpose.

For a representative composition of these PU rigid foams, see WO 2015/121057 and WO 2013/139781.

Common polyols used in huge quantities are, e.g., polyester polyols, low molecular weight polyols such as ethylene glycol or propylene glycol, or high molecular weight polyether polyols based on glycerol, ethylene glycol, polypropylene glycol, polytetramethylene glycol, and polyesterpolyols.

In an embodiment, the polyurethane rigid foams are selected from aromatic isocyanate-based polyurethane rigid foams, preferably from methylenedi(phenylisocyanate)-based polyurethane rigid foams, polymeric methylenedi(phenylisocyanate)-based polyurethane rigid foams and 1,5-naphthyldiisocyanate-based polyurethane rigid foams. Methylenedi(phenylisocyanate)-based polyurethane rigid foams and olymeric methylenedi(phenylisocyanate)-based polyurethane rigid foams are especially preferred.

Polyfunctional isocyanates based on diphenylmethane diisocyanate (MDI) are in particular 2,2'-MDI or 2,4'-MDI or 4,4'-MDI or oligomeric MDI, which is also known as polyphenylpolymethylene isocyanate, or mixtures of two or three aforementioned diphenylmethane diisocyanates, or crude MDI, which is generated in the production of MDI, or mixtures of at least one oligomer of MDI and at least one of the aforementioned low molecular weight MDI derivatives.

In a methylenedi(phenyl¬isocyanate)-based polyurethane rigid foam, isomeric mixtures of 4,4'-, 2,4'- and 2,2'-diphenylmethane diisocyanates; isomeric mixtures of 4,4'- and 2,2'-diphenylmethane diisocyanates; polyphenylpolymethylene polyisocyanates; or mixtures of 4,4'-, 2,4'- and 2,2'-diphenylmethane diisocyanates and polyphenylpolymethylene polyisocyanates (crude MDI) can also be used.

Use is frequently also made of modified polyisocyanates, i.e., products obtained by chemical reaction of organic polyisocyanates and having two or more reactive isocyanate groups per molecule. Polyisocyanates comprising ester, urea, biuret, allophanate, carbodiimide, isocyanurate, uretdione, carbamate and/or urethane groups may be mentioned in particular.

Aromatic isocyanates are compounds wherein the isocyanate functional group is directly bound to the aromatic core. In comparison, a compound such as p-xylylene diisocyanate is not considered an aromatic isocyanate because the isocyanate functional groups are bound to a methylene spacer and, hence, not directly to the aromatic core.

Methylenedi(phenylisocyanate) (MDI)-based polyurethanes and polymeric methylenedi(phenylisocyanate)-based polyurethanes are technical polymers and produced in a large scale (see: Polyurethanes, in Ullmann's Encyclopedia of Industrial Chemistry, 2012, DOI: 10.1002/14356007.a21_665.pub2).

The process of the invention yields a polyamine comprising an amino group attached to the carbon atom to which in the initial polyisocyanate a isocyanate group was bound, e.g., methylene diphenyl diamines, oligomeric and polymeric methylene phenylene amine and toluenediamines (1,2-toluenediamine or 1,4-toluenediamine) or 1,5-naphthyldiamine. The commonly used polyols as described above can be re-isolated. Thus, the process further yields, e.g., polyester polyols, low molecular weight polyols such as ethylene glycol or propylene glycol, or high molecular weight polyether polyols based on glycerol, sorbitol, ethylene glycol, polypropylene glycol and polytetramethylene glycol.

The polyurethane rigid foams used in the present invention are obtained from items produced from polyurethane rigid foams at a time after use for the purpose for which they were manufactured or polyurethane rigid foam waste from production processes. Before subjecting to hydrogenation, the items may be subjected to mechanical comminution. That is, further sorting and bringing the items into appropriate sizes, e.g., by shredding, sieving or separation by rates of density, i.e. by air, a liquid or magnetically. Optionally, these fragments may then undergo processes to eliminate impurities, e.g. paper labels.

Generally, phosphorous ester-based flame retardants used for polyurethane rigid foams, e.g. for constructions applications, conform to compounds of general formula (i): 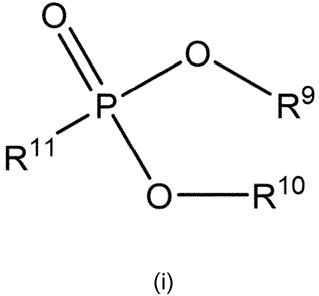
wherein R⁹ and R¹⁰ is independently of one another selected from C₁-C₁₂-alkyl, C₅-C₈-cycloalkyl and aryl, wherein
the C₁-C₁₂-alkyl is unsubstituted or carries 1, 2, 3, 4 or 5 identical or different substituents selected from hydroxy and halogen, such as Cl or Br, and
the C₅-C₈-cycloalkyl or aryl are unsubstituted or carry 1, 2, 3, 4 or 5 identical or different substituents selected from alkyl, hydroxy and halogen, such as Cl or Br, and
wherein R¹¹ is selected from C₁-C₁₂-alkyl, C₅-C₈-cycloalkyl and aryl, wherein
the C₁-C₁₂-alkyl is unsubstituted or carries 1, 2, 3, 4 or 5 identical or different substituents selected from hydroxy and halogen, such as Cl or Br, and
the C₅-C₈-cycloalkyl or aryl are unsubstituted or carry 1, 2, 3, 4 or 5 identical or different substituents selected from alkyl, hydroxy and halogen, such as Cl or Br, or
wherein R¹¹ is selected from -O-C₁-C₁₂-alkyl, -O-C₅-C₈-cycloalkyl and -O-aryl, wherein
the-O-C₁-C₁₂-alkyl is unsubstituted or carries 1, 2, 3, 4 or 5 identical or different substituents selected from hydroxy and halogen, such as Cl or Br, and
the -O-C₅-C₈-cycloalkyl or -O-aryl are unsubstituted or carry 1, 2, 3, 4 or 5 identical or different substituents selected from alkyl, hydroxy and halogen, such as Cl or Br.

Preferably, the aryl is selected from phenyl and naphthyl.

In an embodiment, the phosphorous ester-based flame retardant is selected from tris(2-chloroethyl)phosphate, tris(chloroisopropyl)phosphate, tris(1,3-dichloro-2-propyl)phosphate, tris(2-ethylhexyl)phosphate, triethylphosphate, tricresylphosphate, tris-(2,3-dibromo)phosphate, tetrakis-(2-chlorethyl)-ethylenediphosphate, dimethylphosphonate, dimethylpropylphosphonate, diphenylcresylphosphate, and mixtures thereof.

Suitably, the phosphorous ester-based flame retardant is present in the polyurethane rigid foams in a content of 1 to 40 wt.-%, preferably 5 to 30 wt.-%, more preferably 8 to 25 wt.-% in the polyol component.

According to the invention, the hydrogenation is carried out in an organic aprotic solvent. The solvent must have certain properties, including the ability to dissolve the polyurethane rigid foams used as starting materials under the hydrogenation conditions as well as chemical inertness under the hydrogenation conditions.

In one embodiment, the organic aprotic solvent is selected from ethers, aromatic hydrocarbons, and mixtures thereof.

Suitable ethers are selected from tetrahydrofuran, 1,4-dioxane, anisole, diethyl ether, diisopropyl ether, dibutyl ether, methyl tert-butyl ether, diethylene glycol dimethyl ether, and diphenylether.

Suitable aromatic hydrocarbons are selected from benzene, toluene, ortho-xylene, meta-xylene, para-xylene, ethylbenzene, mesitylene, pyridine, 2,3-lutidine, 2,4-lutidine, 2,5-lutidine, 2,6-lutidine, 3,4-lutidine, 3,5-lutidine, collidine, 2-picoline, 3-picoline, 4-picoline.

If desired, mixtures of two or more of the afore-mentioned organic aprotic solvents may be used.

In a preferred embodiment, the ether is selected from tetrahydrofuran, 1,4-dioxane, and anisole; the aromatic hydrocarbon is selected from benzene, toluene, xylene, and mesitylene.

While the net energy balance of the hydrogenation reaction is exothermal, the initiation requires supply of energy (activation energy). Higher temperatures also facilitate solubilization of the polyurethane rigid foams by the organic aprotic solvents defined above to make the polyurethane rigid foam accessible for hydrogenation. To provide the required activation energy and to solubilize sufficient amounts of polyurethane rigid foam, the hydrogenation reaction is carried out at elevated reaction temperatures of at least 120°C. In one embodiment, the reaction temperature is from 120 to 220 °C, preferably from 140 to 200 °C.

The hydrogenation is carried out in a hydrogen atmosphere. This is because molecular hydrogen is consumed during the hydrogenation reaction of polyurethane rigid foams. Hydrogen pressure has an influence on the outcome of the reaction. Lower pressures typically result in a slower rate of reaction, whereas higher pressures result in a faster rate of reaction. Thus, the hydrogen atmosphere is suitably present at elevated pressure levels. Hence, the hydrogenation reaction occurs in a pressurized reaction vessel, e.g. an autoclave. In one embodiment, the hydrogenation reaction is carried out at a pressure of 30 to 500 bar absolute, preferably 40 to 300 bar absolute, more preferably 50 to 200 bar absolute.

The hydrogenation reaction is carried out in the presence of at least one homogeneous transition metal catalyst complex (hereinafter also referred to as "hydrogenation catalyst"), comprising at least one polydentate ligand having at least one nitrogen atom and at least one phosphorous atom which are capable of coordinating to the transition metal.

Generally, the amount of the hydrogenation catalyst present in the hydrogenation reaction may be varied in a wide range. Suitably, the hydrogenation catalyst is present in the hydrogenation reaction in an amount of 0.1 to 5000 ppm (parts per weight calculated as catalyst metal), preferably 1 to 2000 ppm, more preferably 50 to 1000 ppm.

The hydrogenation catalyst comprises a transition metal selected from metals of groups 7, 8, 9 and 10, preferably of groups 7 or 8, of the periodic table of elements according to IUPAC.

In one embodiment, the homogeneous transition metal catalyst complex comprises a transition metal selected from manganese, iron, cobalt, rhodium, osmium, rhenium, ruthenium, iridium, nickel, palladium and platinum. Preferred transition metals are ruthenium and iridium. A further preferred transition metal is manganese due to its wide availability.

Generally, the homogeneous transition metal catalyst complex comprises at least one ligand in order to solubilize the transition metal in the reaction solution and to maintain the transition metal in an active form for hydrogenation. Preferred ligands are polydentate ligands having at least one nitrogen atom and at least one phosphorous atom which are capable of coordinating to the transition metal.

The hydrogenation catalyst may further comprise one or more additional ligands, such as an anion selected from the group consisting of hydride, alkoxides, aryloxides, carboxylates and acyl, or a neutral ligand selected from the group consisting of carbon monoxide, triaryl phosphines, amines, N-heterocyclic carbenes and isonitriles. Preferably, the hydrogenation catalyst further comprises a carbon monoxide ligand, a halide or a hydride.

In one embodiment, the at least one polydentate ligand conforms to general formula (I) 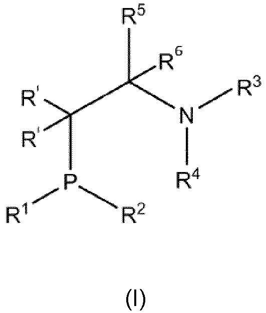 in which
each R' is independently H or C₁-C₄-alkyl,
R¹ and R², independently of one another, are C₁-C₁₂-alkyl, cycloalkyl or aryl,
   which alkyl is unsubstituted or carries 1, 2, 3, 4 or 5 identical or different substituents R⁷, and
   which cycloalkyl and aryl are unsubstituted or carry 1, 2, 3, 4 or 5 identical or different substituents R⁸,
R³ and R⁴, independently of one another, are H or C₁-C₁₂-alkyl, which is unsubstituted or carries 1, 2, 3, 4 or 5 identical or different substituents selected from heterocycloalkyl, aryl, hetaryl, alkoxy, cycloalkoxy, heterocycloalkoxy, aryloxy, hetaryloxy, hydroxyl, NE¹E² and PR¹R²,
R⁵ is H or C₁-C₁₂-alkyl, which is unsubstituted or carries 1, 2, 3, 4 or 5 identical or different substituents R⁷,
R⁶ is H or C₁-C₄-alkyl,
or
R⁴ and R⁶ are absent and R³ and R⁵, together with the nitrogen atom to which R³ is bonded and the carbon atom to which R⁵ is bonded, form a 6-membered heteroaromatic ring,
   which is unsubstituted or carries 1, 2, 3, 4 or 5 identical or different substituents which are selected from C₁-C₁₂-alkyl, cycloalkyl, aryl and hetaryl,
   which alkyl is unsubstituted or carries 1, 2, 3, 4 or 5 identical or different substituents R⁷, and
   which cycloalkyl, aryl and hetaryl are unsubstituted or carry an alkyl substituent which is unsubstituted or carries a substituent selected from alkoxy, cycloalkoxy, heterocycloalkoxy, aryloxy, hetaryloxy, hydroxyl, NE¹E² and PR¹R²,
each R⁷ is independently cycloalkyl, heterocycloalkyl, aryl, hetaryl, alkoxy, cycloalkoxy, heterocycloalkoxy, aryloxy, hetaryloxy, hydroxyl or NE¹E²,
each R⁸ is independently C₁-C₄-alkyl, cycloalkyl, heterocycloalkyl, aryl, hetaryl, alkoxy, cycloalkoxy, heterocycloalkoxy, aryloxy, hetaryloxy, hydroxyl or NE¹E², and
E¹ and E², independently of one another and independently of each occurrence, are radicals selected from H, C₁-C₁₂-alkyl, cycloalkyl and aryl.

The term "cycloalkyl" (also in combinations such as "cycloalkyloxy") indicates a saturated cyclic aliphatic hydrocarbon radical having 3 to 8 carbon atoms, preferably 4 to 7 carbon atoms, more preferably 5 to 6 carbon atoms. Preference is given to cyclopentyl or cyclohexyl.

The term "heterocycloalkyl" (also in combinations such as "heterocycloalkoxy") indicates a saturated 3 to 8 membered cyclic hydrocarbon radical, wherein one or more carbon atoms have been replaced by heteroatoms selected from O, S, N and P, or combinations thereof. Preference is given to pyrrolidinyl, imidazolidinyl, pyrazolidinyl, piperidyl, piperazinyl, morpholinyl, tetrahydrofuranyl, tetrahydropyranyl, tetrahydrothiophene and the like, and also methyl-, ethyl-, propyl-, isopropyl- and tert-butyl-substituted derivatives thereof.

The term "aryl" (also in combinations such as aryloxy) indicates monocyclic or annelated aromatic carbocycles, preferably phenyl or naphthyl radicals, more preferably phenyl radicals.

The term "hetaryl" (also in combinations such as hetaryloxy) indicates a 3 to 8 membered aromatic carbocycle, wherein one or more carbon atoms have been replaced by heteroatoms selected from O, S, N and P, or combinations thereof, and which may be annelated with 1 or 2 aromatic cycles. Preference is given to furyl, thienyl, pyrrolyl, pyridyl, pyrazolyl, imidazolyl, oxazolyl, thiazolyl, pyrimidinyl, pyrazinyl and the like, and also methyl-, ethyl-, propyl-, isopropyl- and tert-butyl-substituted derivatives thereof. Most preferably, hetaryl is pyridyl.

Preferably, R' is H.

Preferably, R¹ and R² are identical and are selected from the group consisting of isopropyl, cyclohexyl, tert-butyl, and phenyl, particularly preferred tert-butyl, and phenyl.

Preferably, R³ is H or C₁-C₃-alkyl, particularly preferred H.

Preferably, R⁴ is H; or -(CH₂)₂-PR¹R², e.g., -(CH₂)₂-PPh₂ or -(CH₂)₂-PⁱPr₂; or C₁-alkyl which carries 1 hetaryl substituent, e.g., -(CH₂)-(2-pyridyl) or -(CH₂)-(1-methyl-imidazol-2-yl), particularly preferred -(CH₂)₂-PPh₂.

Preferably, R⁵ is H or C₁-C₃-alkyl, particularly preferred H.

Preferably, R⁶ is H.

In a further preferred embodiment, R⁶ and R⁴ are absent and R³ and R⁵, together with the nitrogen atom to which R³ is bonded and the carbon atom to which R⁵ is bonded, form a 6-membered heteroaromatic ring. Preferably, the 6-membered heteroaromatic ring carries one substituent, preferably in the 6-position, assuming that the heteroatom is in the 1-position and -CR'R'-PR¹R² is in the 2-position.

In one embodiment, the at least one polydentate ligand conforms to general formula (II) 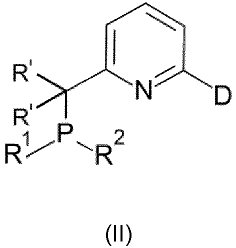 in which
D is H, C₁-C₁₂-alkyl, cycloalkyl, aryl or hetaryl,
which alkyl is unsubstituted or carries 1, 2, 3, 4 or 5 identical or different substituents R⁷, and
which cycloalkyl, aryl or hetaryl are unsubstituted or carry an alkyl substituent which is unsubstituted or carries a substituent selected from alkoxy, cycloalkoxy, heterocycloalkoxy, aryloxy, hetaryloxy, hydroxyl, NE¹E² and PR¹R², preferably NE¹E² and PR¹R².

In a preferred embodiment, D is C₁-C₁₂-alkyl substituted by NE¹E²; hetaryl which is unsubstituted; or hetaryl which carries a C₁-C₁₂-alkyl substituted by NE¹E² or PR¹R²; particularly preferred hetaryl which is unsubstituted.

In a more preferred embodiment, D is a methyl group substituted by NE¹E²; 2-pyridyl which is unsubstituted; or 2-pyridyl which is substituted in 6-position by -CH₂-NE¹E² or -CH₂-PR¹R²; particularly preferred 2-pyridyl which is unsubstituted.

In one embodiment, the at least one polydentate ligand is selected from compounds A to L,
wherein Et is ethyl, ⁱPr is isopropyl, *^{t}*Bu is tert-butyl, Cy is cyclohexyl, Ph is phenyl:

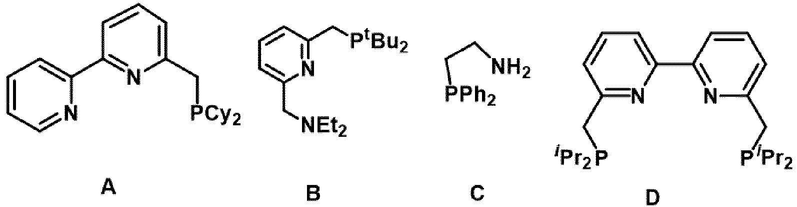

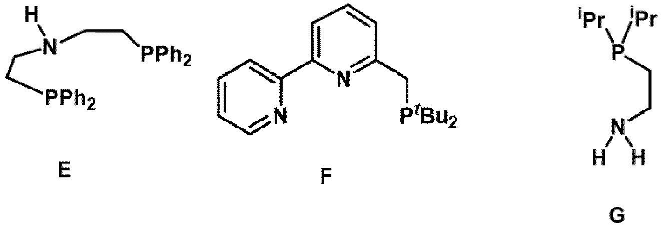

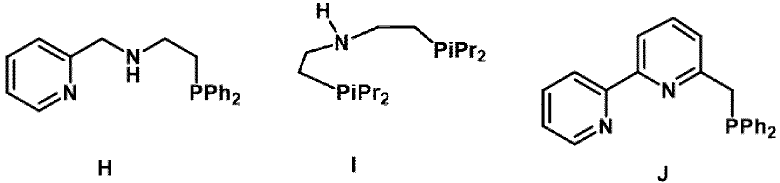

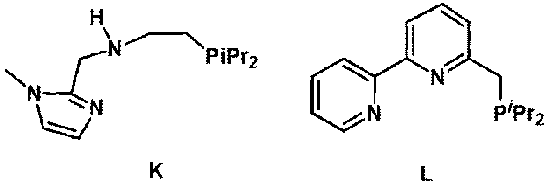

Homogeneous, e.g. ruthenium-based, hydrogenation catalyst complexes have been known per se. Such catalyst complexes allow for catalytically active ruthenium in an effective environment for hydrogenations. For this purpose, various ligand systems have been studied; for example, BINAP- (Noyori), P,N,N- (Milstein) or P,N,P-ligands (Takasago) have been used successfully in hydrogenation reactions.

Similarly, manganese-based hydrogenation catalyst complexes have been known per se.

In a preferred embodiment, the transition metal is ruthenium and the polydentate ligand conforms to one of compounds A to G or J, particularly preferred E, F and J.

In another embodiment, the transition metal is manganese and the polydentate ligand conforms to one of compounds A, E, or H to L, particularly preferred E and J.

The hydrogenation catalyst may be employed in the form of a preformed metal complex, which comprises the metal compound and one or more ligands.

In a preferred embodiment, the hydrogenation catalyst is a pre-formed ruthenium-catalyst, selected from compounds Ru-1 to Ru-10,
wherein Et is ethyl, ⁱPr is isopropyl, ^{t}Bu is tert-butyl, Cy is cyclohexyl, Ph is phenyl: 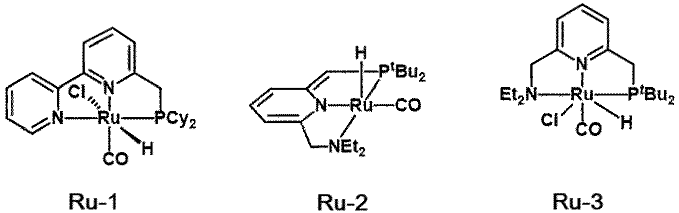 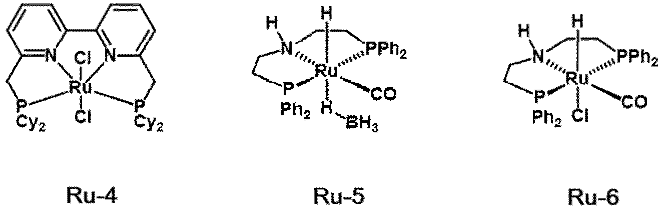 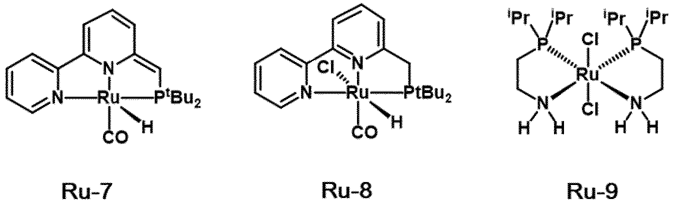 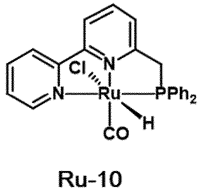
or the hydrogenation catalyst is a pre-formed manganese-catalyst, selected from compounds Mn-1 to Mn-8,
wherein ⁱPr is isopropyl, Cy is cyclohexyl, Ph is phenyl:

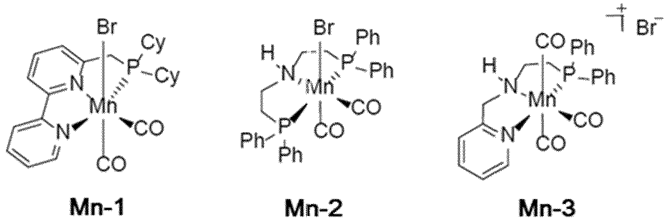

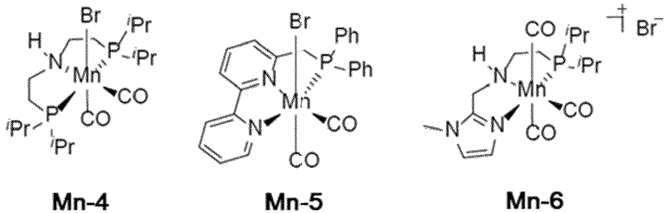

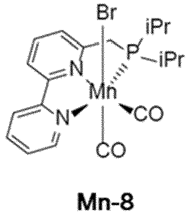

No special or unusual techniques are needed for preparing the catalyst used in the present invention. However, in order to obtain a catalyst of high activity, it is preferred to carry out the manipulations under an inert atmosphere, e.g., nitrogen, argon and the like.

Alternatively, the hydrogenation catalyst is formed in situ in the reaction mixture by combining a metal compound, hereinafter also referred to as "pre-catalyst", and at least one suitable ligand to form a catalytically active metal complex in the reaction medium ("hydrogenation catalyst"). It is also possible that the hydrogenation catalyst is formed in situ in the presence of an auxiliary ligand by combining a metal compound and at least one auxiliary ligand to form a catalytically active metal complex in the reaction medium.

Suitable pre-catalysts are selected from neutral metal complexes, oxides and salts of the transition metals. Preferred pre-catalysts are selected from metal complexes, oxides and salts of manganese, rhenium, ruthenium, iridium, nickel, palladium and platinum.

In the context of this application, "COD" denotes 1,5-cyclooctadiene, "Cp" denotes cyclopentadienyl, "Cp*" denotes pentamethylcycopentadienyl and "binap" denotes 2,2'-bis(diphenylphosphino)-1,1'-binaphthyl.

Suitable rhenium pre-catalysts are selected from ammoniumperrhenate, chlorotricarbonyl(2,2'-bipyridine)rhenium(I), chlorotricarbonyl(4,4'-di-t-butyl-2,2'-bipyridine)rhenium(I), cyclopentadienylrhenium tricarbonyl, iododioxobis(triphenylphosphine)rhenium(V), methyltrioxorhenium(VII), pentamethylcyclopentadienylrhenium tricarbonyl, rhenium carbonyl, rhenium(V) chloride, rhenium pentacarbonyl bromide, and trifluoromethylsulfonatotricarbonyl(2,2'-bipyridine)rhenium(I).

Suitable ruthenium pre-catalysts are selected from [Ru(methylallyl)₂COD], [Ru(p-cymene)Cl₂]₂, [Ru(benzene)Cl₂]ₙ, [Ru(CO)₂Cl₂]ₙ, [Ru(CO)₃Cl₂]₂, [Ru(COD)(allyl)], [RuCl₃·H₂O], [Ru(acetylacetonate)₃], [Ru(DMSO)₄Cl₂], [Ru(PPh₃)₃(CO)(H)Cl], [Ru(PPh₃)₃(CO)Cl₂], [Ru(PPh₃)₃(CO)(H)₂], [Ru(PPh₃)₃Cl₂], [Ru(Cp)(PPh₃)₂Cl], [Ru(Cp)(CO)₂Cl], [Ru(Cp)(CO)₂H], [Ru(Cp)(CO)₂]₂, [Ru(Cp*)(CO)₂Cl], [Ru(Cp*)(CO)₂H], [Ru(Cp*)(CO)₂]₂, [Ru(indenyl)(CO)₂Cl], [Ru(indenyl)(CO)₂H], [Ru(indenyl)(CO)₂]₂, ruthenocen, [Ru(binap)(Cl)₂], [Ru(2,2'-bipyridin)₂(Cl)₂·H₂O], [Ru(COD)(Cl)₂H]₂, [Ru(Cp*)(COD)Cl], [Ru₃(CO)₁₂], [Ru(tetraphenylhydroxycyclopentadienyl)(CO)₂H], [Ru(PMe₃)₄(H)₂], [Ru(PEt₃)₄(H)₂], [Ru(Pn-Pr₃)₄(H)₂], [Ru(Pn-Bu₃)₄(H)₂], and [Ru(Pn-octyl₃)₄(H)₂], preferably [Ru(methylallyl)₂COD], Ru(COD)Cl₂]₂, [Ru(Pn-Bu₃)₄(H)₂], [Ru(Pn-octyl₃)₄(H)₂], [Ru(PPh₃)₃(CO)(H)Cl] and [Ru(PPh₃)₃(CO)(H)₂], more preferably [Ru(PPh₃)₃(CO)(H)Cl].

Suitable iridium pre-catalysts are selected from [IrCl₃·H₂O], KlrCl₄, K₃IrCl₆, [Ir(COD)Cl]₂, [Ir(cyclooctene)₂Cl]₂, [Ir(ethene)₂Cl]₂, [Ir(Cp)Cl₂]₂, [Ir(Cp*)Cl₂]₂, [Ir(Cp)(CO)₂], [Ir(Cp*)(CO)₂], [Ir(PPh₃)₂(CO)Cl], and [Ir(PPh₃)₃Cl], preferably [Ir(COD)Cl]₂, [Ir(cyclooctene)₂Cl]₂, and [Ir(Cp*)Cl₂]₂.

Suitable nickel pre-catalysts are selected from [Ni(COD)₂], Ni(CO)₄, NiCl₂, NiBr₂, NiI₂, Ni(OAc)₂ [Ni(AcAc)₂], [Ni(Cl)₂(TMEDA)], [Ni(Cl)₂(DME)], [Ni(Br)₂(DME)], [Ni(Cl)₂(PPh₃)₂], [Ni(CO)₂(PPh₃)], [Ni(Cl)(methallyl)]₂, [Ni(CO₃)], nickel(II)diemthylglyoxime, nickel(II)2-ethylhexanoate, nickel(II)hexafluroacetlyacetonate, bis(N,N'-di-t-butylacetamidinato)nickel(II), nickel(ll)oxalate, Ni(NO₃)₂, nickel(II)stearate, Ni(SO₄), nickel(ll)tetrafluoroborate hexahydrate, nickel(II)trifluoroaceylacetonate dehydrate, and nickel(II)trifluoromethanesulfonate.

Suitable palladium pre-catalysts are selected from allyl(cyclopentadienyl)palladium(II), bis[(trimethylsilyl)methyl](1,5-cyclooctadiene)palladium(II), allylpalladium chloride dimer, ammonium tetrachloropalladate(II), bis[1,2-bis(diphenylphosphino)ethane]palladium(0), bis(dibenzylideneacetone)palladium(0), trans-bis(dicyclohexylamine)bis(acetato)-palladium(II), bis(2-methylallyl)palladium chloride dimer, bis(tri-t-butylphosphine)-palladium(0), bis(tricyclohexylphosphine)palladium(0), bis(tri-o-tolylphosphine)-palladium(0), chloromethyl(1,5-cyclooctadiene)palladium(II), diacetato[1,3-bis(diphenyl-phosphino)propane]palladium(ll), diacetatobis(triphenylphosphine)palladium(ll), diacetato(1,10-phenanthroline)palladium(ll), di-µ-bromobis(tri-t-butylphosphino)-dipalladium(I), trans-dibromobis(triphenylphosphine)palladium(ll), dibromo(1,5-cyclooctadiene)palladium(ll), dichlorobis(benzonitrile)palladium(ll), dichlorobis(di-t-butyl-phenylphosphino)palladium(ll), di-µ-chlorobis{2-[(dimethylamino)methyl]phenyl}di-palladium, trans-dichlorobis(tricyclohexylphosphine)palladium(II), trans-dichlorobis(triphenylphosphine)palladium(II), dichloro(1,5-cyclooctadiene)palladium(II), dichloro(nor-bornadiene)palladium(II), cis-dichloro(N,N,N',N'-tetramethylethylenediamine)palladium(II), cis-dimethyl(N,N,N',N'-tetramethylethylenediamine)palladium(II), (1-methylallyl)palladium chloride dimer, palladium(II) acetate, palladium(II) acetylacetonate, palladium(II) benzoate, palladium(II) bromide, palladium(II) chloride, palladium(II) hexafluoroacetylacetonate, palladium(II) iodide, palladium(II) sulfate, palladium(II) trifluoroacetate, palladium(II) trimethylacetate, tetrakis(triphenylphosphine)palladium(0), and tris(dibenzylideneacetone)dipalladium(0).

Suitable platinum pre-catalysts are selected from ammonium tetrachloroplatinate(II), bis(tri-t-butylphosphine)platinum (0), bis(ethylenediamine)platinum(II) chloride, dibromo(1,5-cyclooctadiene)platinum(II), dichlorobis(benzonitrile)platinum(II), cis-dichlorobis(diethylsulfide)platinum(II), cis-dichlorobis(pyridine)platinum(II), cis-dichlorobis(triethylphosphine)platinum(II), dichloro(1,5-cyclooctadiene)platinum(II), cis-dichlorodiammine platinum(II), di-µ-chloro-dichlorobis(ethylene)diplatinum(II), dichloro(dicyclopentadienyl)platinum(II), di-µ-iodobis(ethylenediamine)diplatinum(II) nitrate, diiodo(1,5-cyclooctadiene)platinum(II), dimethyl(1,5-cyclooctadiene)platinum(II), platinum(II) acetylacetonate, platinum(II) acetylacetonate, platinum(II) bromide, platinum(II) chloride, platinum(II) iodide, potassium bis(oxalato)platinate(II) dihydrate, tetrakis(triphenylphosphine)platinum(0), and tris(dibenzylideneacetone)diplatinum(0).

Suitable manganese pre-catalysts are selected from MnCl₂, MnCl₂·4H₂O, MnBr₂, MnBr₂·4 H₂O, MnBr₂·2 THF, Manganocene, [Mn(Cylopentadienyl)(CO)₃], [Mn(Methylcylopentadienyl)(CO)₃], [Mn(Pentamethylcylopentadienyl)(CO)₃] MnOAc₂, MnOAc₂·4 H₂O, MnOAc₃·2 H₂O, Mn(ll)acetylacetonate, Mn(III)acetylacetonate, Mn₂(CO)₁₀, Mn(NO₃)₂, [Mn(Br)(CO)₅], and Mn(ClO₄)₂·6 H₂O.

The abovementioned hydrogenation catalyst, which comprises the polydentate ligand conforming to general formula (I), may be used in the hydrogenation reaction without the need of additional bases. However, usually, higher activities are obtained by combining catalytic amounts of a base with the hydrogenation catalyst.

In one embodiment, the hydrogenation reaction is carried out in the presence of a base, preferably an alkali metal or alkaline earth metal carbonate, an alkali metal or alkaline earth metal hydroxide or an alkali metal or alkaline earth metal alcoholate. Preferably, the base is an alkali metal alcoholate such as potassium tert-butoxide.

Generally, the base is present in the hydrogenation reaction in the range of the amount of hydrogenation catalyst used. Suitably, the base is present in an amount of 1 to 50 equivalents, preferably 1 to 10 equivalents, more preferably 1 to 4 equivalents, based on the amount of hydrogenation catalyst.

The inventive process for hydrogenating polyurethane rigid foams may be carried out in customary devices and/or reactors known to the person skilled in the art for liquid-gas reactions in which the hydrogenation catalyst is present in the liquid phase. For the inventive process, it is in principle possible to use any reactor which is fundamentally suitable for gas-liquid reactions at the stated temperatures and the stated pressures.

For suitable standard reactors for gas-liquid and for liquid-liquid reaction systems, see e.g.: Reactor Types and Their Industrial Applications and Reactors for gas-liquid reactions, in Ullmann's Encyclopedia of Industrial Chemistry, 2005, Wiley-VCH Verlag GmbH & Co. KGaA, chapter 3.3. Suitable examples include, e.g., stirred tank reactors, tubular reactors or bubble column reactors. The supply of polyurethane rigid foam, hydrogenation catalyst, organic solvent and base may take place simultaneously or separately from one another. The reaction may be carried out discontinuously in batch mode or continuously, semi-continuously with recycle or without recycle. The average residence time in the reaction space may be varied in a wide range, preferably in the range from 15 minutes to 100 h, more preferably in the range from 1 to 50 h.

Generally, the organic aprotic solvent is employed in an amount sufficient to swell or partially dissolve the polyurethane rigid foam. As the hydrogenation reaction progresses, the polyurethane rigid foam gradually dissolves in the reaction solution. Suitably, the ratio of organic aprotic solvent and polyurethane rigid foam is in the range of 0.1 to 100 L organic aprotic solvent per 1 kg polyurethane rigid foam, preferably 1 to 20 L organic aprotic solvent per 1 kg.

The present invention can be further explained and illustrated on the basis of the following examples. However, it will be understood that these examples are included merely for purposes of illustration and are not intended to limit the scope of the invention in any way.

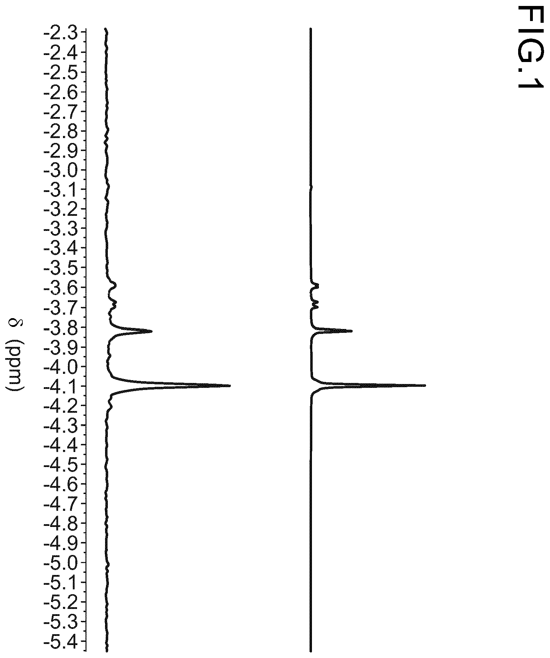

Fig. 1 shows a comparison of the ³¹P NMR spectrum of a sample of flame retardant TCPP (top) and the flame retardant obtained after hydrogenation of PU rigid foam Index 100 (bottom).

### Examples

### Materials

All chemicals and solvents were purchased from Sigma-Aldrich or ABCR and used without further purification, unless otherwise specified. ¹H, ¹³C and ³¹P NMR spectra were recorded on Bruker Avance 200 or 400 MHz spectrometer and were referenced to the residual proton (¹H) or carbon (¹³C) resonance peaks of the solvent. Chemical shifts (δ) are reported in ppm. ³¹P NMR spectra were referred to an external standard (ample of D₃PO₄).

In the hydrogenation examples that follow, PU rigid foam Index 100 was used. PU rigid foam Index 100 is based on 74 wt.-parts Lupranol 3422 (a commercial polyetherpolyol available from BASF SE, Germany based on sorbitol and propyleneoxide containing only secondary hydroxy groups), 20 wt.-parts Lupragen TCPP (flame retardant tris(2-chloroisopropyl)phosphate), 3 wt.-parts Tegostab B 842045 (silicone surfactant available from Evonik Industries AG), 0.5 wt.-parts Lupragen N600 (a tertiary amine available from BASF SE, Germany), 2.5 wt.-parts water, 5 wt.-parts cyclopentane, and 100 wt.-parts Lupranat MP 102 (short chain prepolymer based on pure 4,4'-diphenylmethane diisocyanate available from BASF SE, Germany), containing therefore 9.4 wt.-% of the flame retardant TCPP in the final PU rigid foam. The results are summarized in table 1.

Hydrogenation catalysts P and Q were prepared according literature protocols: E. Balaraman, J. Am. Chem. Soc. 2010, 132, 16756-16758 and D. Srimani, Adv. Synth. Catal. 2013, 355, 2525-2530. Hydrogenation catalyst Mn-1 was prepared similar to literature protocols using Mn(CO)₅Br as metal precursor: W. Zhou, ChemSusChem 2021, 14, 4176-4180 (ligand synthesis) and V. Zubar, Angew. Chem. Int. Ed. 2018, 57, 13439-13443 (complex synthesis). Hydrogenation catalyst Mn-5 was prepared according to literature protocols: W. Zhou, ChemSusChem 2021, 14, 4176-4180 and U. K. Das, ACS Catal. 2018, 9, 479-484.

### Reference example 1: Synthesis of hydrogenation catalyst H

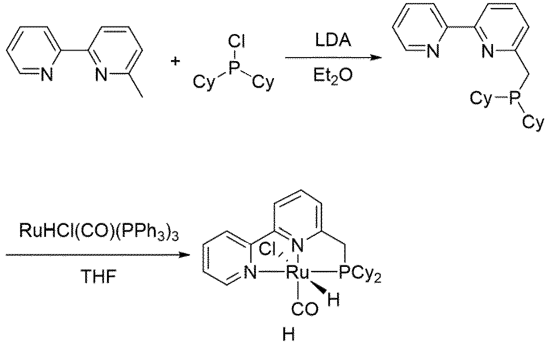

First step: In a 50 mL Schlenk tube, 6-metyl-2,2'-bipyridine (511 mg, 3.00 mmol) was dissolved in 15 mL Et₂O, cooled to 0 °C and LDA (3.50 mL, 1 M in THF/hexanes) was added dropwise. After stirring at 0 °C for 1 h, the system was cooled to -80 °C by ⁱPrOH/liquid N₂ and ClPCy₂ (815 g, 3.50 mmol) in 5 mL Et₂O was added slowly. The cooling bath was removed after 1 h and the mixture was recovered to r.t. gradually and stirred overnight. The reaction mixture was quenched by adding 10 mL of degassed water to the yellow slurry. The organic phase was separated and the aqueous phase was extracted with ether (2 x 5 mL). The combined organic phase was dried over Na₂SO₄, filtered and the solvent was removed to give the crude ligand as a sticky orange oil. 52% purity based on ³¹P NMR. It was used directly for the next step without further purification.

Second step: The ligand obtained in the first step was dissolved in 20 mL THF. RuHCl(CO)(PPh₃)₃ (952 mg, 1.00 mmol) was added, the mixture was stirred at 70 °C for 5 hours and then cooled to r.t. The solvent was reduced to ca. 10 mL under vacuum and 20 mL of Et₂O were added to the remaining red-orange dispersion. The solution was removed via cannula and the solid was washed with Et₂O (2 x 10 mL) and dried under vacuum to give 465.2 mg of the orange product (87% yield based on Ru).

³¹P{¹H} NMR (122 MHz, CD₂Cl₂) δ 83.68.

¹H NMR (301 MHz, CD₂Cl₂) δ 9.22 - 9.13 (m, 1H), 8.07 - 7.97 (m, 1H), 7.93 (d, J = 8.0 Hz, 1H), 7.86 (td, J = 8.0, 1.6 Hz, 1H), 7.82 (td, J = 8.0, 0.9 Hz, 1H), 7.49 (d, J = 7.7 Hz, 1H), 7.45 - 7.39 (m, 1H), 3.82 - 3.56 (m, 2H), 2.46 - 2.27 (m, 2H), 2.08 - 0.99 (m, 20H), -14.83 (d, J = 23.6 Hz, 1H).

¹³C {¹H} NMR (126 MHz, CD₂Cl₂) δ 207.71 (d, J = 14.9 Hz), 161.70 (d, J = 5.1 Hz), 156.38, 154.78 (d, J = 2.7 Hz), 153.51 (d, J = 1.7 Hz), 137.30, 136.51, 126.42 (d, J = 1.9 Hz), 123.13 (d, J = 9.6 Hz), 122.76 (d, J = 1.6 Hz), 119.73, 40.59 (d, J = 22.2 Hz), 38.59 (d, J = 23.4 Hz), 35.76 (d, J = 28.9 Hz), 31.01 (d, J = 2.9 Hz), 29.60 (d, J = 4.2 Hz), 28.61 (d, J = 4.5 Hz), 28.20 (d, J = 13.6 Hz), 27.73, 27.56 (d, J = 9.2 Hz), 26.82 (d, J = 4.4 Hz), 26.74 (d, J = 3.5 Hz), 26.71 (d, J = 2.0 Hz), 26.35 (d, J = 1.5 Hz). HRMS (ESI): m/z calcd. for C₂₄H₃₂N₂OPRu [M-Cl]⁺: 497.1296, found: 497.1291.

### Reference example 2: Synthesis of hydrogenation catalyst Mn-1

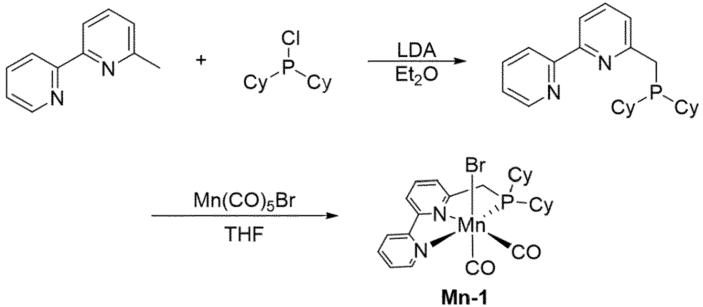

First step: The Cy-PNN ligand was synthesized similarly to the above-described procedure for hydrogenation catalyst H and used without further purification in the next step.

Second step: To a solution of the Cy-PNN ligand (406 mg, 1.11 mmol) in 4 mL THF was added under argon atmosphere an orange solution of Mn(CO)₅Br (240 mg, 0.88 mmol) in 10 mL THF and the reaction mixture was kept stirring at room temperature for 24 h (Note: The CO gas liberated needs to be removed occasionally in vacuo). The solution was evaporated in vacuo. The solid residue was washed with pentane (10 mL), which on evaporation gave a dark brown solid product. The brown crude product was dissolved in THF (15 mL), the solution was filtered, concentrated, layered with pentane and kept in the refrigerator (-30 °C) to obtain a dark red solid in 71% (350 mg, based on Mn) yield.

³¹P {¹H} NMR (162 MHz, CDCl₃) δ 89.77.

### Example 1: Hydrogenation of a polyurethane rigid foam containing a phosphorous ester-based flame retardant

A stainless steel autoclave (Premex) fitted with a Teflon insert was charged with PU rigid foam Index 100 (1.00 g). Inside a glovebox, catalyst and base were added. The walls were rinsed with the indicated solvent and the autoclave was closed. Outside the glovebox, the autoclave was flushed with hydrogen gas (2 x 5 bar) and charged with hydrogen gas (50 bar). The autoclave was heated for 21 h to 200 °C under stirring (pre-heated metal block, 750 RPM). After cooling to room temperature (ice-bath), the residual pressure was carefully released. The suspension was filtered over a suction filter and the remaining solid was washed with dichloromethane (3x5 mL) and EtOH (3x5 mL). The solid, residual polymer was dried under reduced pressure (r.t., < 5.0 10⁻² mbar) and used for the determination of the conversion (conversion = [(polymer used - polymer recovered) / polymer used] x 100). After removal of the solvent of the filtrate under reduced pressure (45 °C, min. pressure 80 mbar), the residue was redissolved in CDCl₃ (2 mL). An aliquot of 1,1,2,2-tetrachloroethane (50.0 µL) as internal standard was added and the solution was homogenized by swirling. The samples were analyzed by H and ³¹P NMR spectroscopy. In the ¹H NMR, the amount of TCPP in the corresponding sample was determined by integration of the TCPP signal (δ = 4.67 ppm) against the 1,1,2,2-tetrachloroethane signal (δ = 6.00 ppm). The samples described in table 1 contained undecomposed flame retardant.

**Table 1: Hydrogenation of PU rigid foam Index 100 (polyurethane rigid foam containing phosphorous ester flame retardants).**

| 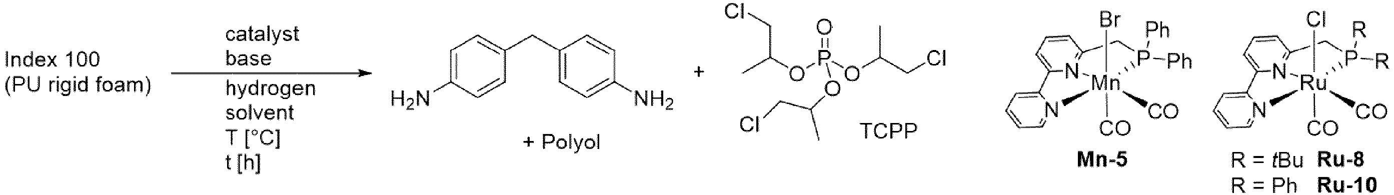 | | | | | | | | | | | |
|---|---|---|---|---|---|---|---|---|---|---|---|
| # | PU rigid foam [g] | catalyst [µmol] | base [µmol] | H₂ pressure [bar] | organic solvent volume [mL] | T [°C] | t [h] | conversion [%] | flame ret. ^{[1]} [g] | polyol [g] | amine [g] |
| 1 | 1 | Mn-5 40.0 | KO*^{t}*Bu 80 | 50 | THF/toluene 8/8 | 200 | 21 | 65 | 0.066 ^{[2]} | n.d. ^{[3]} | n.d. ^{[3]} |
| 2 | 1 | Ru-8 20 | KO*^{t}*Bu 80 | 50 | THF 10 | 200 | 21 | 78 | 0.057 ^{[2]} | n.d. ^{[3]} | n.d. ^{[3]} |
| 3 | 1 | Ru-10 20 | KO*^{t}*Bu 80 | 50 | THF 10 | 200 | 21 | 88 | 0.084 ^{[2]} | n.d. ^{[3]} | n.d. ^{[3]} |

| | | | | | | | | | | | |
|---|---|---|---|---|---|---|---|---|---|---|---|
| [1] flame retardant = TCPP [2] determined by quantitative ¹H NMR by integration of corresponding signals against 1,1,2,2-tetrachloroethane (50.0 µL) [3] not determined | | | | | | | | | | | |

The phosphorous ester-based flame retardant of table 1 remained undecomposed as evidenced from ³¹P NMR as can be seen from Fig. 1. In Fig. 1, a comparison is shown of the ³¹P NMR spectrum of a sample of flame retardant TCPP (Fig. 1, top) and the flame retardant obtained after hydrogenation of PU rigid foam Index 100 (Fig. 1, bottom). All relevant signals in the range of from -4.10 to -3.55 ppm are detected in both the top and the bottom spectrum of the ³¹P NMR.

### Example 2: Hydrogenation of a polyurethane rigid foam (5 g) containing a phosphorous ester-based flame retardant

A stainless steel autoclave (Premex) fitted with a Teflon insert was charged with PU rigid foam Index 100 (5.12 g). Inside a glovebox, Mn-5 (200 µmol) and KOtBu (400 µmol) were added. The walls were rinsed with THF (40 mL) and toluene (40 mL) and the autoclave was closed. Outside the glovebox, the autoclave was flushed with hydrogen gas (2x15 bar) and finally charged with hydrogen gas (50 bar). The autoclave was heated for 21 h to 200 °C under stirring (pre-heated metal block, 750 RPM). After cooling to room temperature (ice-bath), the residual pressure was carefully released. The suspension was filtered over a suction filter and the remaining solid was washed with dichloromethane (3x20 mL). The solid, residual polymer was dried under reduced pressure (r.t., < 5.0·10⁻² mbar) and used for the determination of the conversion (conversion = [(polymer used - polymer recovered) / polymer used] x 100). The conversion of the hydrogenation of PU rigid foam Index 100 was 62%. After removal of the solvent of the filtrate under reduced pressure (45 °C, min. pressure 80 mbar), the residue was purified by distillation in a Kugelrohr oven at 150 to 170 °C under reduced pressure (1.4·10⁻¹ mbar). The obtained fractions were analyzed by ¹H and ³¹P NMR spectroscopy. TCPP was obtained as light yellowish oil (404 mg).

### Comparative Example 1: Hydrolytic depolymerization of a polyurethane rigid foam containing a phosphorous ester-based flame retardant

As comparative example, hydrolytic depolymerization of a polyurethane rigid foam was carried out instead of hydrogenative depolymerization. For this purpose, a sample of a PU rigid foam containing a phosphorous ester-based flame retardant (Index 100, composition see above) was hydrolyzed with a mixture of pyridine and water at 160 °C in a sealed glass pressure tube.

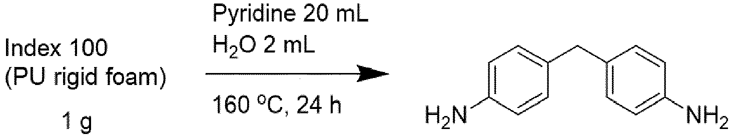

After the reaction, a reaction mixture in the form of a dark brown solution was obtained which was free of solids. By analyzing said reaction mixture via GC/MS, 4,4'-methylenedianiline was detected. However, the reaction mixture did not contain a phosphorous ester-based flame retardant according to GC/MS or ³¹P NMR data. Thus, the phosphorous ester-based flame retardant was hydrolyzed under these conditions.

Experimental details: In air, a stainless steel autoclave (Premex) fitted with a Teflon insert was charged with PU rigid foam Index 100 (1.00 g). The walls were rinsed with pyridine (20 mL) and water (2 mL). The autoclave was closed and heated for 16 h to 160 °C. After cooling to room temperature (ice-bath), the brown solution was filtered over a suction filter and the filter was rinsed with EtOH (3x5 mL). No solid remained on the filter. The solvent was removed under reduced pressure (45 °C, min. pressure 60 mbar). According to ¹H and ³¹P NMR analysis, no flame retardant was detected in neither of the crude or isolated material.

Comparative Example 2: Hydrogenative depolymerization of a polyurethane rigid foam containing a phosphorous ester-based flame retardant using MACHO catalysts in iso-propanol

The results and conditions of the following procedure are summarized in table 2.

A stainless steel autoclave (Premex) fitted with a Teflon insert was charged with PU rigid foam Index 100 (1.00 g). Inside a glovebox, catalyst and base were added. The walls were rinsed with iso-propanol and the autoclave was closed. Outside the glovebox, the autoclave was flushed with hydrogen gas (2x15 bar) and finally charged with hydrogen gas (50 bar). The autoclave was heated for 21 h to 180 °C under stirring (pre-heated metal block, 750 RPM). After cooling to room temperature (ice-bath), the residual pressure was carefully released. The suspension was filtered over a suction filter and the remaining solid was washed with dichloromethane (3x5 mL) and EtOH (3x5 mL). The solid, residual polymer was dried under reduced pressure (r.t., < 5.0 10⁻² mbar) and used for the determination of the conversion (conversion = [(polymer used - polymer recovered) / polymer used] x 100). After removal of the solvent of the filtrate under reduced pressure (45 °C, min. pressure 80 mbar), the residue was redissolved in CDCl₃ (2 mL). An aliquot of 1,1,2,2-tetrachloroethane (50.0 µL) as internal standard was added and the solution was homogenized by swirling. The samples were analyzed by H and ³¹P NMR spectroscopy. In the ¹H NMR, the amount of TCPP in the corresponding sample was determined by integration of the TCPP signal (δ = 4.67 ppm) against the 1,1,2,2-tetrachloroethane signal (δ = 6.00 ppm).

The reaction mixture of entry 2 was additionally purified by flash column chromatography (EtOAc-hexane) to determine the amount of amine. In the end, the silica pad was flushed with EtOH to elute the polyol fraction.

**Table 2: Hydrogenation of PU rigid foam Index 100 (polyurethane rigid foam containing phosphorous ester flame retardants).**

| 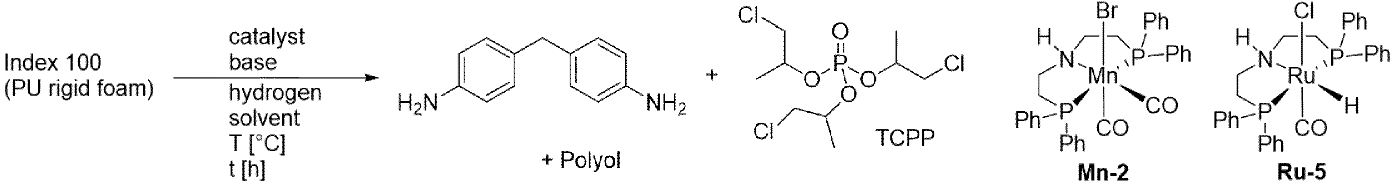 | | | | | | | | | | | |
|---|---|---|---|---|---|---|---|---|---|---|---|
| # | PU rigid foam [g] | catalyst [µmol] | base [µmol] | H₂ pressure [bar] | organic solvent volume [mL] | T [°C] | t [h] | conversion [%] | flame ret. ^{[1]} [g] | polyol [g] | amine [g] |
| 1 | 1 | Mn-2 2.1 | KOH 21 | 50 | *ⁱ*PrOH 2.5 | 180 | 21 | 93 | - ^{[2]} | n.d. ^{[3]} | n.d. ^{[3]} |
| 2 | 1 | Mn-2 16.0 | KOH 160 | 50 | *ⁱ*PrOH 19.2 | 180 | 21 | >99 | 0.010 ^{[4,5]} | 0.461 ^{[4,6]} | 0.488 ^{[4,7]} |
| 3 | 1 | Ru-5 16.0 | KOH 160 | 50 | *ⁱ*PrOH 19.2 | 180 | 21 | >99 | - ^{[2]} | n.d. ^{[3]} | n.d. ^{[3]} |

| | | | | | | | | | | | |
|---|---|---|---|---|---|---|---|---|---|---|---|
| [1] flame retardant = TCPP [2] no flame retardant detected [3] not determined [4] quantification after flash column chromatography (EtOAc-hexane) [5] the isolated fraction contained decomposed flame retardant [6] contains aromatic side products as well as solvent (EtOH) according to ¹H NMR [7] contains solvent (EtOAc) as well as alkylated (mono or diiso-propyl) amine | | | | | | | | | | | |

### Comparative Example 3: Stability of TCPP under hydrogenating conditions (mixture of isomers, flame retardant) using Mn- or Ru-catalysts in various solvents

The results and conditions of the following procedure are summarized in table 3.

Inside a glovebox, a stainless steel autoclave (Premex) was charged with catalyst, base and TCPP (mixture of isomers, flame retardant). The walls were rinsed with solvent and the autoclave was closed. Outside the glovebox, the autoclave was flushed with hydrogen gas (2x15 bar) and finally charged with hydrogen gas (50 bar). The autoclave was heated for 21 h to the indicated temperature under stirring (pre-heated metal block, 750 RPM). After cooling to room temperature (ice-bath), the residual pressure was carefully released. The obtained mixture was filtered over a short pad of Celite in a Pasteur pipette and the pad was washed with dichloromethane (3x5 mL). After removal of the solvent under reduced pressure (45 °C, min. pressure 80 mbar), the residue was weighed and analyzed by ¹H and ³¹P NMR to determine the amount of recovered flame retardant (recovery = [(amount of TCPP detected) / (amount of TCPP used)] x 100).

**Table 3: Hydrogenation of TCPP (mixture of isomers, flame retardant).**

| 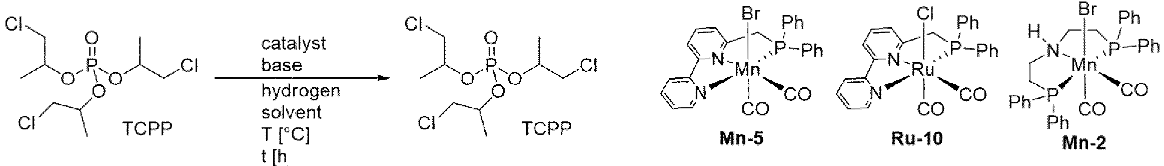 | | | | | | | | | |
|---|---|---|---|---|---|---|---|---|---|
| # | flame ret. ^{[1]} [g] | catalyst [µmol] | base [µmol] | H₂ pressure [bar] | organic solvent volume [mL] | T [°C] | t [h] | recovery [%] | flame ret. ^{[1]} [g] |
| 1 | 0.164 | Mn-5 40 | KO*^{t}*Bu 80 | 50 | THF/toluene 8/8 | 200 | 21 | 84 | 0.137 |
| 2 | 0.164 | Ru-10 20 | KO*^{t}*Bu 80 | 50 | THF 10 | 200 | 21 | 82 | 0.134 |
| 3 | 0.164 | Mn-2 16 | KOH 160 | 50 | *ⁱ*PrOH 19.2 | 180 | 21 | <1 | -- ^{[2,3]} |

| | | | | | | | | | |
|---|---|---|---|---|---|---|---|---|---|
| [1] flame retardant = TCPP [2] no flame retardant detected [3] very broad, flat signal detected in the ³¹P NMR spectrum | | | | | | | | | |

Under hydrogenation conditions in the presence of an aprotic solvent, the phosphorous ester-based flame retardant (see table 3) remained undecomposed as evidenced from ³¹P NMR (-4.10 to -3.55 ppm).

However, under hydrogenation conditions in the presence of a protic solvent such as iso-propanol, only an unspecific and very broad, flat signal (δ -31.76 to +20.82 ppm) was detected in the ³¹P NMR spectrum.

## Claims

1. A value chain return process for polyurethane rigid foams containing at least one phosphorous ester-based flame retardant, comprising
hydrogenating the polyurethane rigid foam
- in an organic aprotic solvent,
- in a hydrogen atmosphere,
- in the presence of at least one homogeneous transition metal catalyst complex, wherein the transition metal is selected from metals of groups 7, 8, 9 and 10 of the periodic table of elements according to IUPAC, and
- at a reaction temperature of at least 120 °C,
to obtain a hydrogenation product containing a polyamine and a polyol from the polyurethane rigid foam, and
recovering the flame retardant from the hydrogenation product.

2. The process according to claim 1, wherein the polyamine is recovered from the hydrogenation product via distillation.

3. The process according to claim 1 or 2, wherein the flame retardant is recovered via distillation from the hydrogenation product, or from a distillation bottoms thereof.

4. The process according to any one of the preceding claims, wherein the polyol is recovered by extraction from the hydrogenation product, or from a distillation bottoms thereof, or is recovered as a distillation bottoms after removal of volatile components.

5. The process according to any one of the preceding claims, wherein the polyurethane rigid foams are selected from aromatic isocyanate-based polyurethane rigid foams, preferably from methylenedi(phenylisocyanate)-based polyurethane rigid foams, polymeric methylenedi(phenylisocyanate)-based polyurethane rigid foams and 1,5-naphthyldiisocyanate-based polyurethane rigid foams.

6. The process according to any one of the preceding claims, wherein the at least one phosphorous ester-based flame retardant is selected from tris(2-chloroethyl)phosphate, tris(chloroisopropyl)phosphate, tris(1,3-dichloro-2-propyl)phosphate, tris(2-ethylhexyl)phosphate, tricresylphosphate, tris-(2,3-dibromo)phosphate, tetrakis-(2-chlorethyl)-ethylenediphosphate, dimethylphosphonate, dimethylpropylphosphonate, diphenylcresylphosphate, triethylphosphate, and mixtures thereof.

7. The process according to any one of the preceding claims, wherein the organic aprotic solvent is selected from ethers, aromatic hydrocarbons, and mixtures thereof.

8. The process according to claim 7, wherein the ether is selected from tetrahydrofuran, 1,4-dioxane, and anisole; the aromatic hydrocarbon is selected from benzene, toluene, xylene, and mesitylene.

9. The process according to any one of the preceding claims, wherein the homogeneous transition metal catalyst complex comprises a transition metal selected from manganese, rhenium, ruthenium, iridium, nickel, palladium and platinum, preferably manganese, ruthenium, and iridium.

10. The process according to any one of the preceding claims, wherein the homogeneous transition metal catalyst complex comprises at least one polydentate ligand having at least one nitrogen atom and at least one phosphorous atom which are capable of coordinating to the transition metal.

11. The process according to claim 10, wherein the at least one polydentate ligand conforms to general formula (I) 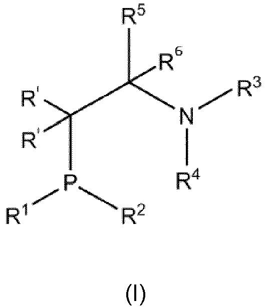 in which
each R' is independently H or C₁-C₄-alkyl,
R¹ and R², independently of one another, are C₁-C₁₂-alkyl, cycloalkyl or aryl,
which alkyl is unsubstituted or carries 1, 2, 3, 4 or 5 identical or different substituents R⁷, and
which cycloalkyl and aryl are unsubstituted or carry 1, 2, 3, 4 or 5 identical or different substituents R⁸,
R³ and R⁴, independently of one another, are H or C₁-C₁₂-alkyl, which is unsubstituted or carries 1, 2, 3, 4 or 5 identical or different substituents selected from heterocycloalkyl, aryl, hetaryl, alkoxy, cycloalkoxy, heterocycloalkoxy, aryloxy, hetaryloxy, hydroxyl, NE¹E² and PR¹R²,
R⁵ is H or C₁-C₁₂-alkyl, which is unsubstituted or carries 1, 2, 3, 4 or 5 identical or different substituents R⁷,
R⁶ is H or C₁-C₄-alkyl,
or
R⁴ and R⁶ are absent and R³ and R⁵, together with the nitrogen atom to which R³ is bonded and the carbon atom to which R⁵ is bonded, form a 6-membered heteroaromatic ring,
which is unsubstituted or carries 1, 2, 3, 4 or 5 identical or different substituents which are selected from C₁-C₁₂-alkyl, cycloalkyl, aryl and hetaryl, which alkyl is unsubstituted or carries 1, 2, 3, 4 or 5 identical or different substituents R⁷, and
which cycloalkyl, aryl and hetaryl are unsubstituted or carry an alkyl substituent which is unsubstituted or carries a substituent selected from alkoxy, cycloalkoxy, heterocycloalkoxy, aryloxy, hetaryloxy, hydroxyl, NE¹E² and PR¹R²,
each R⁷ is independently cycloalkyl, heterocycloalkyl, aryl, hetaryl, alkoxy, cycloalkoxy, heterocycloalkoxy, aryloxy, hetaryloxy, hydroxyl or NE¹E²,
each R⁸ is independently C₁-C₄-alkyl, cycloalkyl, heterocycloalkyl, aryl, hetaryl, alkoxy, cycloalkoxy, heterocycloalkoxy, aryloxy, hetaryloxy, hydroxyl or NE¹E², and
E¹ and E², independently of one another and independently of each occurrence, are radicals selected from H, C₁-C₁₂-alkyl, cycloalkyl and aryl.

12. The process according to claim 11, wherein the at least one polydentate ligand conforms to general formula (II) 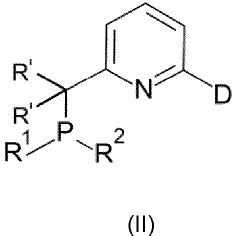 in which
D is H, C₁-C₁₂-alkyl, cycloalkyl, aryl or hetaryl,
which alkyl is unsubstituted or carries 1, 2, 3, 4 or 5 identical or different substituents R⁷, and
which cycloalkyl, aryl or hetaryl are unsubstituted or carry an alkyl substituent which is unsubstituted or carries a substituent selected from alkoxy, cycloalkoxy, heterocycloalkoxy, aryloxy, hetaryloxy, hydroxyl, NE¹E² and PR¹R², preferably NE¹E² and PR¹R².

13. The process according to any one of the preceding claims, wherein the at least one polydentate ligand is selected from compounds A to L,
wherein Et is ethyl, *ⁱ*Pr is isopropyl, *^{t}*Bu is tert-butyl, Cy is cyclohexyl, Ph is phenyl:

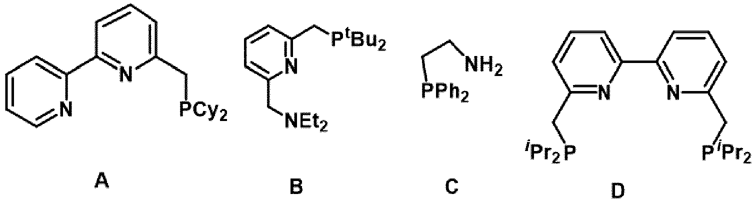

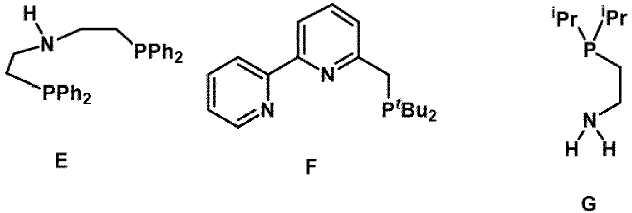

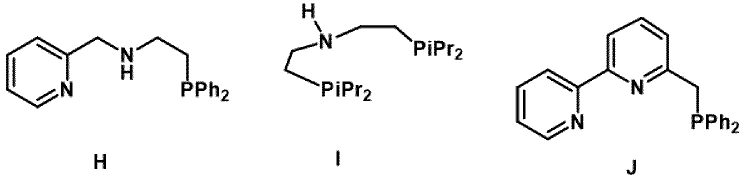

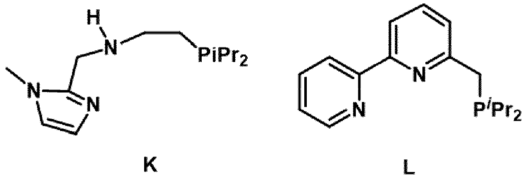

14. The process according to any one of the preceding claims, wherein the hydrogenation reaction is carried out at a pressure of 30 to 500 bar absolute, preferably 40 to 300 bar absolute, more preferably 50 to 200 bar absolute.

15. The process according to any one of the preceding claims, wherein the hydrogenation reaction is carried out in the presence of a base, preferably an alkali metal or alkaline earth metal carbonate, an alkali metal or alkaline earth metal hydroxide or an alkali metal or alkaline earth metal alcoholate, more preferably an alkali metal tert-butoxide.

## Patentansprüche

1. Wertkettenrückführverfahren für Polyurethanhartschaumstoffe, die mindestens ein Flammschutzmittel auf Phosphoresterbasis enthalten, umfassend
die Hydrierung des Polyurethanhartschaumstoffs
- in einem organischen aprotischen Lösungsmittel,
- in einer Wasserstoffatmosphäre,
- in Gegenwart mindestens eines homogenen Übergangsmetallkatalysatorkomplexes, wobei das Übergangsmetall aus Metallen der Gruppen 7, 8, 9 und 10 des Periodensystems der Elemente gemäß IUPAC ausgewählt ist, und
- bei einer Reaktionstemperatur von mindestens 120 °C, unter Erhalt eines ein Polyamin und ein Polyol enthaltenden Hydrierungsprodukts aus dem Polyurethanhartschaumstoff, und
die Rückgewinnung des Flammschutzmittels aus dem Hydrierungsprodukt.

2. Verfahren nach Anspruch 1, wobei das Polyamin durch Destillation aus dem Hydrierungsprodukt zurückgewonnen wird.

3. Verfahren nach Anspruch 1 oder 2, wobei das Flammschutzmittel durch Destillation aus dem Hydrierungsprodukt oder aus einem Destillationssumpf davon zurückgewonnen wird.

4. Verfahren nach einem der vorhergehenden Ansprüche, wobei das Polyol durch Extraktion aus dem Hydrierungsprodukt oder aus einem Destillationssumpf davon zurückgewonnen wird oder nach Entfernung flüchtiger Komponenten als Destillationssumpf zurückgewonnen wird.

5. Verfahren nach einem der vorhergehenden Ansprüche, wobei die Polyurethanhartschaumstoffe aus aromatischen Polyurethanhartschaumstoffen auf Isocyanatbasis, vorzugsweise aus Polyurethanhartschaumstoffen auf Methylendi(phenylisocyanat)-Basis, polymeren Polyurethanhartschaumstoffen auf Methylendi(phenylisocyanat)-Basis und Polyurethanhartschaumstoffen auf 1,5-Naphthyldiisocyanat-Basis ausgewählt sind.

6. Verfahren nach einem der vorhergehenden Ansprüche, wobei das mindestens eine Flammschutzmittel auf Phosphoresterbasis aus Tris(2-chlorethyl)phosphat, Tris(chlorisopropyl)phosphat, Tris(1,3-dichlor-2-propyl)phosphat, Tris(2-ethylhexyl)phosphat, Tricresylphosphat, Tris(2,3-dibrom)phosphat, Tetrakis-(2-chlorethyl)ethylendiphosphat, Dimethylphosphonat, Dimethylpropylphosphonat, Diphenylcresylphosphat, Triethylphosphat und Mischungen davon ausgewählt ist.

7. Verfahren nach einem der vorhergehenden Ansprüche, wobei das organische aprotische Lösungsmittel aus Ethern, aromatischen Kohlenwasserstoffen und Mischungen davon ausgewählt ist.

8. Verfahren nach Anspruch 7, wobei der Ether aus Tetrahydrofuran, 1,4-Dioxan und Anisol ausgewählt ist und der aromatische Kohlenwasserstoff aus Benzol, Toluol, Xylol und Mesitylen ausgewählt ist.

9. Verfahren nach einem der vorhergehenden Ansprüche, wobei der homogene Übergangsmetallkatalysatorkomplex ein aus Mangan, Rhenium, Ruthenium, Iridium, Nickel, Palladium und Platin, vorzugsweise Mangan, Ruthenium und Iridium, ausgewähltes Übergangsmetall umfasst.

10. Verfahren nach einem der vorhergehenden Ansprüche, wobei der homogene Übergangsmetallkatalysatorkomplex mindestens einen mehrzähnigen Liganden mit mindestens einem Stickstoffatom und mindestens einem Phosphoratom umfasst, die in der Lage sind, sich mit dem Übergangsmetall zu koordinieren.

11. Verfahren nach Anspruch 10, wobei der mindestens eine mehrzähnige Ligand der allgemeinen Formel (I) entspricht 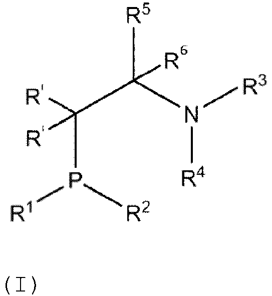 wobei
R' jeweils unabhängig für H oder C₁-C₄-Alkyl steht,
R¹ und R² unabhängig voneinander für C₁-C₁₂-Alkyl, Cycloalkyl oder Aryl stehen, wobei Alkyl unsubstituiert ist oder 1, 2, 3, 4 oder 5 gleiche oder verschiedene Substituenten R⁷ trägt, und
wobei Cycloalkyl und Aryl unsubstituiert sind oder 1, 2, 3, 4 oder 5 gleiche oder verschiedene Substituenten R⁸ tragen,
R³ und R⁴ unabhängig voneinander für H oder C₁-C₁₂-Alkyl, das unsubstituiert ist oder 1, 2, 3, 4 oder 5 gleiche oder verschiedene, aus Heterocycloalkyl, Aryl, Hetaryl, Alkoxy, Cycloalkoxy, Heterocycloalkoxy, Aryloxy, Hetaryloxy, Hydroxyl, NE¹E² und PR¹R² ausgewählte Substituenten trägt, stehen,
R⁵ für H oder C₁-C₁₂-Alkyl, das unsubstituiert ist oder 1, 2, 3, 4 oder 5 gleiche oder verschiedene Substituenten R⁷ trägt, steht,
R⁶ für H oder C₁-C₄-Alkyl steht,
oder
R⁴ und R⁶ fehlen und R³ und R⁵ zusammen mit dem Stickstoffatom, an das R³ gebunden ist, und dem Kohlenstoffatom, an das R⁵ gebunden ist, einen 6-gliedrigen heteroaromatischen Ring bilden,
der unsubstituiert ist oder 1, 2, 3, 4 oder 5 gleiche oder verschiedene, aus C₁-C₁₂-Alkyl, Cycloalkyl, Aryl und Hetaryl ausgewählte Substituenten trägt,
wobei Alkyl unsubstituiert ist oder 1, 2, 3, 4 oder 5 gleiche oder verschiedene Substituenten R⁷ trägt, und
wobei Cycloalkyl, Aryl und Hetaryl unsubstituiert sind oder einen Alkylsubstituenten tragen, der unsubstituiert ist oder einen aus Alkoxy, Cycloalkoxy, Heterocycloalkoxy, Aryloxy, Hetaryloxy, Hydroxyl, NE¹E² und PR¹R² ausgewählten Substituenten trägt,
R⁷ jeweils unabhängig für Cycloalkyl, Heterocycloalkyl, Aryl, Hetaryl, Alkoxy, Cycloalkoxy, Heterocycloalkoxy, Aryloxy, Hetaryloxy, Hydroxyl oder NE¹E² steht,
R⁸ jeweils unabhängig für C₁-C₄-Alkyl, Cycloalkyl, Heterocycloalkyl, Aryl, Hetaryl, Alkoxy, Cycloalkoxy, Heterocycloalkoxy, Aryloxy, Hetaryloxy, Hydroxyl oder NE¹E² steht, und
E¹ und E² unabhängig voneinander und unabhängig bei jedem Auftreten für aus H, C₁-C₁₂-Alkyl, Cycloalkyl und Aryl ausgewählte Reste stehen.

12. Verfahren nach Anspruch 11, wobei der mindestens eine mehrzähnige Ligand der allgemeinen Formel (II) entspricht 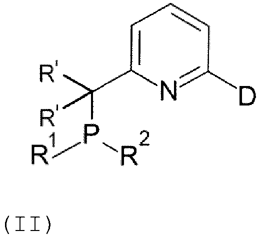 wobei
D für H, C₁-C₁₂-Alkyl, Cycloalkyl, Aryl oder Hetaryl steht,
wobei Alkyl unsubstituiert ist oder 1, 2, 3, 4 oder 5 gleiche oder verschiedene Substituenten R⁷ trägt, und
wobei Cycloalkyl, Aryl oder Hetaryl unsubstituiert sind oder einen Alkylsubstituenten tragen,
der unsubstituiert ist oder einen aus Alkoxy, Cycloalkoxy, Heterocycloalkoxy, Aryloxy, Hetaryloxy, Hydroxyl, NE¹E² und PR¹ R², vorzugsweise NE¹E² und PR¹R², ausgewählten Substituenten trägt.

13. Verfahren nach einem der vorhergehenden Ansprüche, wobei der mindestens eine mehrzähnige Ligand aus den Verbindungen A bis L ausgewählt ist,
wobei Et für Ethyl steht, *ⁱ*Pr für Isopropyl steht, *^{t}*Bu für tert.-Butyl steht, Cy für Cyclohexyl steht und Ph für Phenyl steht:

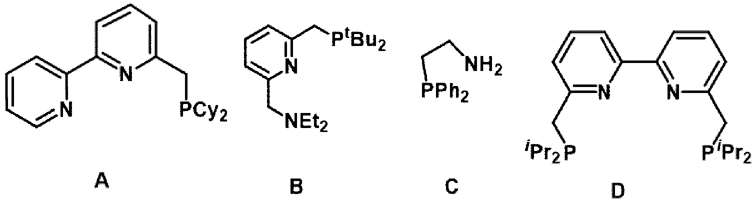

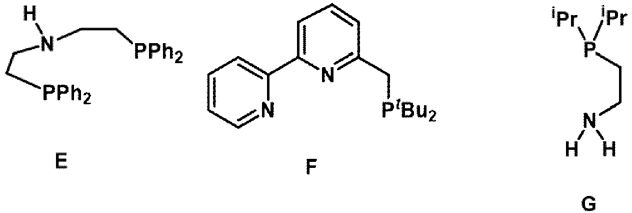

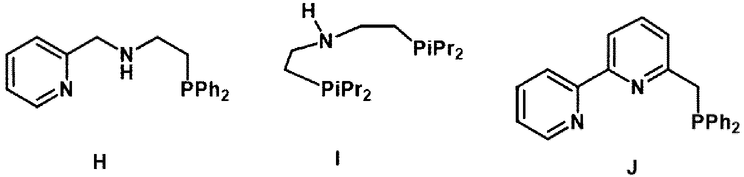

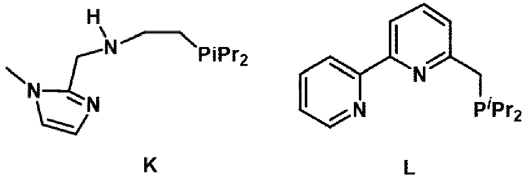

14. Verfahren nach einem der vorhergehenden Ansprüche, wobei die Hydrierungsreaktion bei einem Druck von 30 bis 500 bar absolut, bevorzugt 40 bis 300 bar absolut, besonders bevorzugt 50 bis 200 bar absolut durchgeführt wird.

15. Verfahren nach einem der vorhergehenden Ansprüche, wobei die Hydrierungsreaktion in Gegenwart einer Base, vorzugsweise eines Alkalimetall- oder Erdalkalimetallcarbonats, eines Alkalimetall- oder Erdalkalimetallhydroxids oder eines Alkalimetall- oder Erdalkalimetallalkoholats, besonders bevorzugt eines Alkalimetall-tert.-butanolats, durchgeführt wird.

## Revendications

1. Procédé de retour de chaîne de valeur pour des mousses rigides de polyuréthane contenant au moins un agent ignifugeant à base d'ester phosphoreux, comprenant l'hydrogénation de la mousse rigide de polyuréthane
- dans un solvant organique aprotique,
- dans une atmosphère d'hydrogène,
- en présence d'au moins un complexe de catalyseur de métal de transition homogène, dans lequel le métal de transition est choisi parmi les métaux des groupes 7, 8, 9 et 10 du tableau périodique des éléments selon l'UICPA et
- à une température de réaction d'au moins 120 °C,
pour obtenir un produit d'hydrogénation contenant une polyamine et un polyol à partir de la mousse rigide de polyuréthane, et
la récupération de l'agent ignifugeant à partir du produit d'hydrogénation.

2. Procédé selon la revendication 1, dans lequel la polyamine est récupérée à partir du produit d'hydrogénation par distillation.

3. Procédé selon la revendication 1 ou 2, dans lequel l'agent ignifugeant est récupéré par distillation à partir du produit d'hydrogénation ou d'un fond de distillation de celui-ci.

4. Procédé selon l'une quelconque des revendications précédentes, dans lequel le polyol est récupéré par extraction à partir du produit d'hydrogénation, ou à partir d'un fond de distillation de celui-ci, ou est récupéré en tant que fond de distillation après élimination de composants volatils.

5. Procédé selon l'une quelconque des revendications précédentes, dans lequel les mousses rigides de polyuréthanne sont choisies parmi les mousses rigides de polyuréthanne à base d'isocyanate aromatique, de préférence parmi les mousses rigides de polyuréthanne à base de méthylènedi(phénylisocyanate), les mousses rigides de polyuréthanne à base de méthylènedi(phénylisocyanate) polymériques et les mousses rigides de polyuréthanne à base de 1,5-diisocyanate de naphtyle.

6. Procédé selon l'une quelconque des revendications précédentes, l'au moins un agent ignifugeant à base d'ester phosphoreux étant choisi parmi phosphate de tris(2-chloroéthyle), phosphate de tris(chloroisopropyle), phosphate de tris(1,3-dichloro-2-propyle), phosphate de tris(2-éthylhexyle), phosphate de tricrésyle, tris-(2,3-dibromo)phosphate, tétrakis-(2-chloroéthyl)-éthylènediphosphate, phosphonate de diméthyle, phosphonate de diméthylpropyle, phosphate de diphénylcrésyle, phosphate de triéthyle et leurs mélanges.

7. Procédé selon l'une quelconque des revendications précédentes, dans lequel le solvant organique aprotique est choisi parmi les éthers, les hydrocarbures aromatiques et leurs mélanges.

8. Procédé selon la revendication 7, dans lequel l'éther est choisi parmi le tétrahydrofuranne, le 1,4-dioxane et l'anisole ; l'hydrocarbure aromatique est choisi parmi le benzène, le toluène, un xylène et le mésitylène.

9. Procédé selon l'une quelconque des revendications précédentes, dans lequel le complexe de catalyseur de métal de transition homogène comprend un métal de transition choisi parmi le manganèse, le rhénium, le ruthénium, l'iridium, le nickel, le palladium et le platine, de préférence le manganèse, le ruthénium, et l'iridium.

10. Procédé selon l'une quelconque des revendications précédentes, dans lequel le complexe de catalyseur de métal de transition homogène comprend au moins un ligand polydentate ayant au moins un atome d'azote et au moins un atome de phosphore qui sont capables de coordiner au métal de transition.

11. Procédé selon la revendication 10, dans lequel l'au moins un ligand polydentate répond à la formule générale (I) 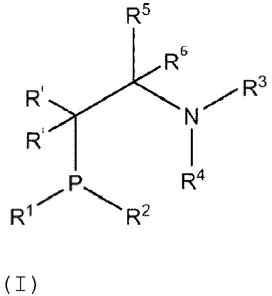 dans laquelle
chaque R' est indépendamment H, ou C₁-C₄-alkyle,
R¹ et R², indépendamment l'un de l'autre, sont C₁-C₁₂-alkyle, cycloalkyle ou aryle, lequel alkyle est non substitué ou porte 1, 2, 3, 4 ou 5 substituants R⁷ identiques ou différents, et
lesquels cycloalkyle et aryle sont non substitués ou portent 1, 2, 3, 4 ou 5 substituants R⁸ identiques ou différents,
R³ et R⁴, indépendamment l'un de l'autre, sont H ou C₁-C₁₂-alkyle, qui est non substitué ou porte 1, 2, 3, 4 ou 5 substituants identiques ou différents choisis parmi hétérocycloalkyle, aryle, hétéroaryle, alcoxy, cycloalcoxy, hétérocycloalkoxy, aryloxy, hétaryloxy, hydroxyle, NE¹E² et PR¹R²,
R⁵ est H ou C₁-C₁₂-alkyle, qui est non substitué ou porte 1, 2, 3, 4 ou 5 substituants R⁷ identiques ou différents, R⁶ est H ou C₁-C₄-alkyle,
ou
R⁴ et R⁶ sont absents et R³ et R⁵, ensemble avec l'atome d'azote auquel R³ est lié et l'atome de carbone auquel R⁵ est lié forment un cycle hétéroaromatique à 6 chaînons,
qui est non substitué ou porte 1, 2, 3, 4 ou 5 substituants identiques ou différents qui sont choisis parmi C₁-C₁₂-alkyle, cycloalkyle, aryle et hétéroaryle,
lequel alkyle est non substitué ou porte 1, 2, 3, 4 ou 5 substituants R⁷ identiques ou différents, et
lesquels cycloalkyle, aryle et hétéroaryle sont non substitués ou portent un substituant alkyle non substitué ou porte un substituant choisi parmi alcoxy, cycloalcoxy, hétérocycloalcoxy, aryloxy, hétaryloxy, hydroxyle, NE¹E² et PR¹R²,
chaque R⁷ est indépendamment cycloalkyle, hétérocycloalkyle, aryle, hétéroaryle, alcoxy, cycloalkoxy, hétérocycloalkoxy, aryloxy, hetaryloxy, hydroxyle, NE¹E²,
chaque R⁸ est indépendamment C₁-C₄-alkyle, cycloalkyle, hétérocycloalkyle, aryle, hétaryle, alcoxy, cycloalcoxy, hétérocycloalcoxy, aryloxy, hétaryloxy, hydroxyle ou NE¹E², et
E¹ et E², indépendamment l'un de l'autre et indépendamment de chaque occurrence, sont des radicaux choisis parmi H, C₁-C₁₂-alkyle, cycloalkyle et aryle.

12. Procédé selon la revendication 11, dans lequel l'au moins un ligand polydentate répond à la formule générale (II) 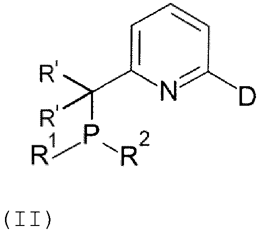 dans laquelle
D est H, C₁-C₁₂-alkyle, cycloalkyle, aryle ou hétaryle,
lequel alkyle est non substitué ou porte 1, 2, 3, 4 ou 5 substituants R⁷ identiques ou différents, et
lesquels cycloalkyle, aryle ou hétéroaryle sont non substitués ou portent un substituant alkyle
qui est non substitué ou porte un substituant choisi parmi alcoxy, cycloalcoxy, hétérocycloalcoxy, aryloxy, hétaryloxy, hydroxyle, NE¹E² et PR¹R², de préférence NE¹E² et PR¹R².

13. Procédé selon l'une quelconque des revendications précédentes, dans lequel l'au moins un ligand polydentate est choisi parmi les composés A à L,
dans lesquels Et est éthyle, *ⁱ*Pr est isopropyle, *^{t}*Bu est tert-butyle, Cy est cyclohexyle, Ph est phényle :

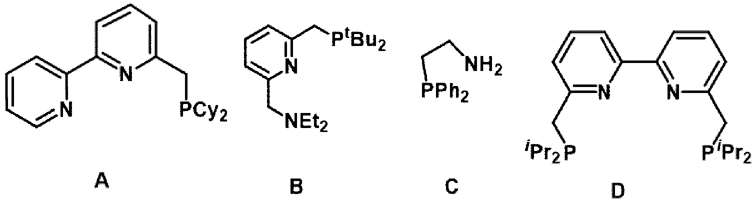

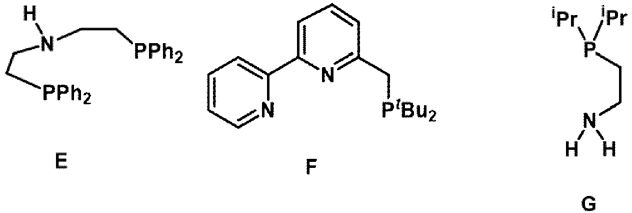

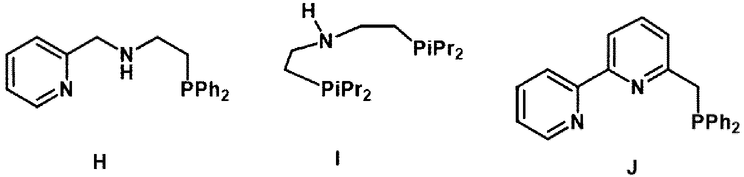

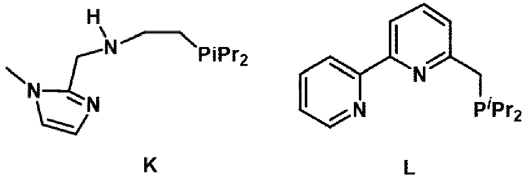

14. Procédé selon l'une quelconque des revendications précédentes, dans lequel la réaction d'hydrogénation est conduite à une pression de 30 à 500 bars absolus, de préférence de 40 à 300 bars absolus, plus préférablement de 50 à 200 bars absolus.

15. Procédé selon l'une quelconque des revendications précédentes, dans lequel la réaction d'hydrogénation est effectuée en présence d'une base, de préférence un carbonate de métal alcalin ou métal alcalino-terreux, un hydroxyde de métal alcalin ou métal alcalino-terreux ou un alcoolate de métal alcalin ou métal alcalino-terreux, plus préférablement un tert-butoxyde de métal alcalin.
